# EUROPEAN PATENT APPLICATION

(11) **EP 4 632 613 A1**
(43) Date of publication of application: **15.10.2025**
(21) Application number: 23900714.9
(22) Date of filing: 07.12.2023
(51) Int. Cl.: G06F 21/64, H04L 9/32

(54) **IMAGE PROCESSING DEVICE AND METHOD**

(30) Priority: 07.12.2022 US 202263430831 P
(71) Applicant: Sony Group Corporation, Tokyo 108-0075 (JP)
(72) Inventor: HIRATSUKA Yosuke, Tokyo 108-0075 (JP)
(74) Representative: D Young & Co LLP
(86) International application number: PCT/JP2023/043768
(87) International publication number: WO 2024/122602

(57) **Abstract**

The present disclosure relates to an image processing device and method capable of suppressing a drop in the reliability of guaranteeing the genuineness of an image.

A certification URL is generated, the certification URL being address information for publicizing a certification web page that certifies genuineness of an image; and the generated certification URL is stored in a file that stores a first image, the first image being the image that has been generated from analog information and is unprocessed. The file storing the image is obtained, the certification web page that certifies the genuineness of the image is generated, and the certification web page is publicized at the certification URL. The present disclosure can be applied in, for example, an image processing device, an image processing method, or the like.

## Description

### [Technical Field]

The present disclosure relates to an image processing device and method, and particularly relates to an image processing device and method capable of suppressing a drop in the reliability of guaranteeing the genuineness of an image.

### [Background Art]

A conventional method exists which enables tampering to be detected by adding a digital signature to an image when the image is shot (see PTL 1, for example). A method also exists in which when an image is generated or edited, a history thereof is left with a digital signature such that the history can be traced (see NPL 1, for example).

### [Citation List]

### [Patent Literature]

[PTL 1]
WO 2022/137798

### [Non Patent Literature]

[NPL 1]
https://c2pa.org/

### [Summary]

### [Technical Problem]

However, technology used in fraudulent behavior such as tampering with images is becoming more sophisticated every year, and it has been difficult to completely prevent fraudulent behavior regardless of what protection method or tampering detection method is applied. Furthermore, beyond the risk of a specific image being tampered with, such fraudulent behavior has also reduced the reliability of systems that guarantee the genuineness of images. It is therefore desirable to deal with such fraudulent behavior as soon as possible, but simply detecting tampering independently on an image-by-image basis delays the detection of fraudulent behavior and may reduce the reliability of the system. In other words, there has been a risk that the reliability of guaranteeing the genuineness of the images will drop.

Having been conceived in light of such a situation, the present disclosure makes it possible to suppress a drop in the reliability of guaranteeing the genuineness of an image.

### [Solution to Problem]

An image processing device according to one aspect of the present technique is an image processing device including: a certification URL generation unit that generates a certification URL, the certification URL being address information for publicizing a certification web page that certifies genuineness of an image; and a certification URL storage unit that stores the certification URL in a file that stores a first image, the first image being the image that has been generated from analog information and is unprocessed.

An image processing method according to one aspect of the present technique is an image processing method including: generating a certification URL, the certification URL being address information for publicizing a certification web page that certifies genuineness of an image; and storing the certification URL generated in a file that stores a first image, the first image being the image that has been generated from analog information and is unprocessed.

An image processing device according to another aspect of the present technique is an image processing device including: a file obtainment unit that obtains a file storing an image; a certification web page generation unit that generates a certification web page, the certification web page certifying genuineness of the image; and a certification web page publicizing unit that publicizes the certification web page at a certification URL.

An image processing method according to another aspect of the present technique is an image processing method including: obtaining a file storing an image; generating a certification web page, the certification web page certifying genuineness of the image; and publicizing the certification web page at a certification URL.

In the image processing device and method according to the one aspect of the present technique, a certification URL is generated, the certification URL being address information for publicizing a certification web page that certifies genuineness of an image; and the generated certification URL is stored in a file that stores a first image, the first image being the image that has been generated from analog information and is unprocessed.

In an image processing device and method according to the other aspect of the present technique, a file storing an image is obtained; a certification web page is generated, the certification web page certifying genuineness of the image; and the certification web page is publicized at a certification URL.

### [Brief Description of Drawings]

[Fig. 1]

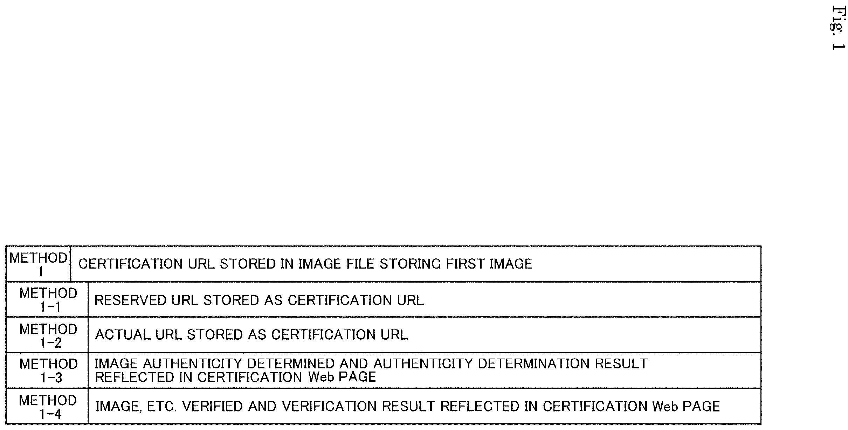

   Fig. 1 is a diagram illustrating an example of a method for generating an image file and a method for publicizing a certification of the genuineness of an image.
[Fig. 2]

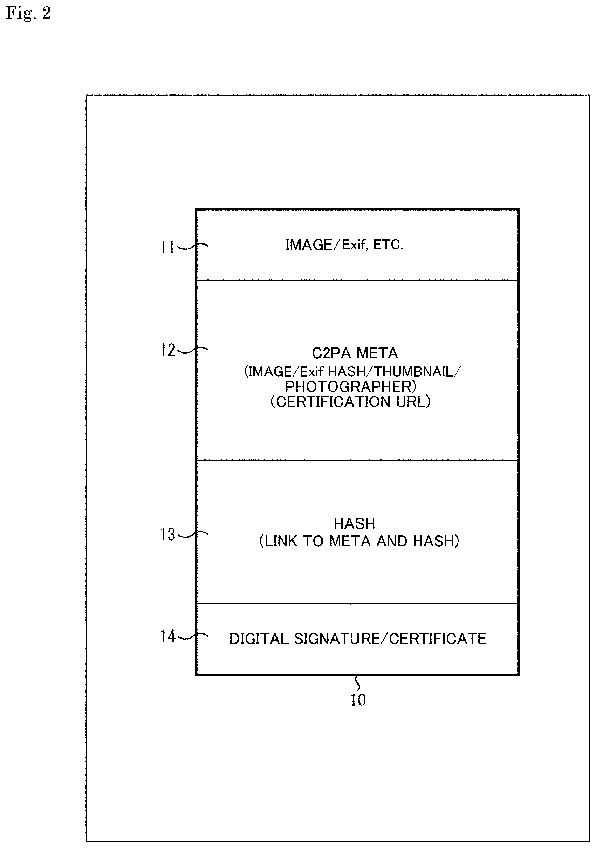

   Fig. 2 is a diagram illustrating an example of the main configuration of an image file.
[Fig. 3]

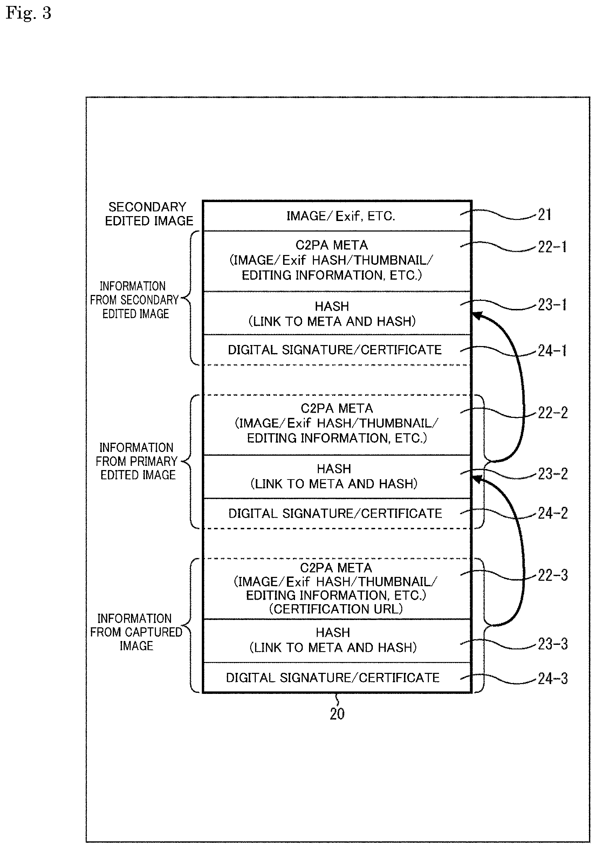

   Fig. 3 is a diagram illustrating an example of the main configuration of an image file.
[Fig. 4]

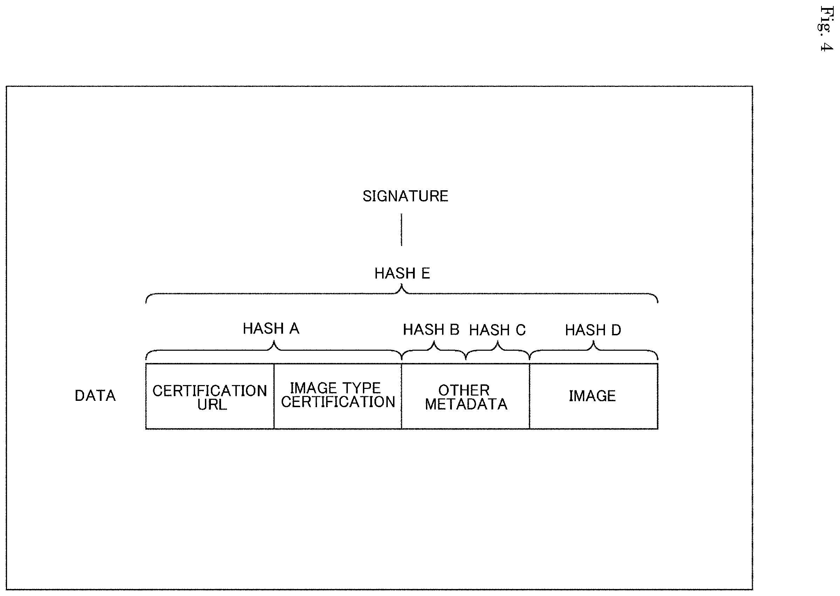

   Fig. 4 is a diagram illustrating an example of the configuration of a hash.
[Fig. 5]

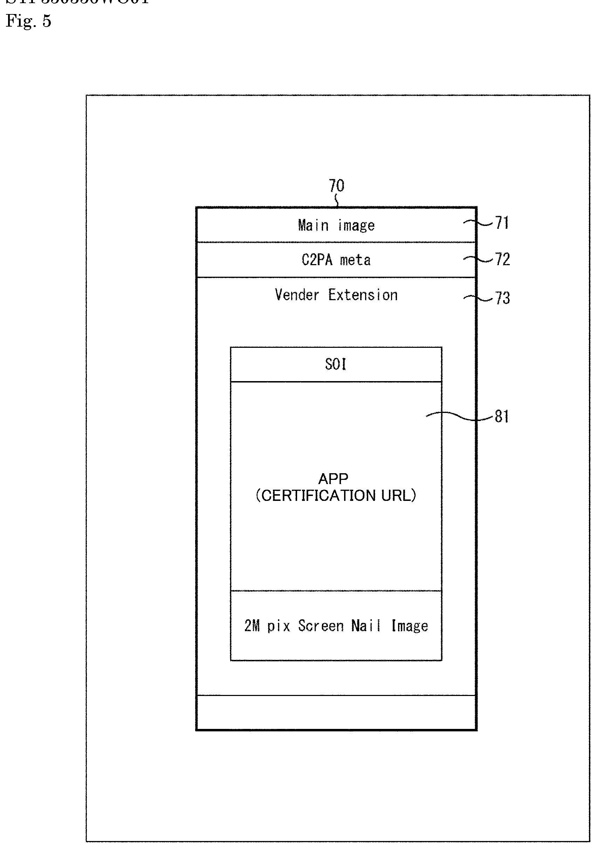

   Fig. 5 is a diagram illustrating an example of a storage location of a certification URL.
[Fig. 6]

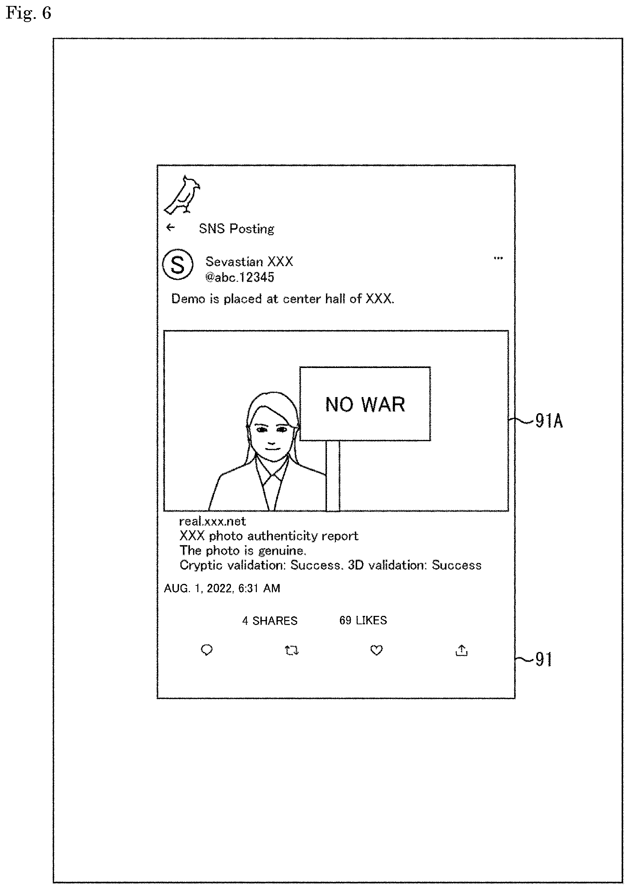

   Fig. 6 is a diagram illustrating an example of an SNS.
[Fig. 7]

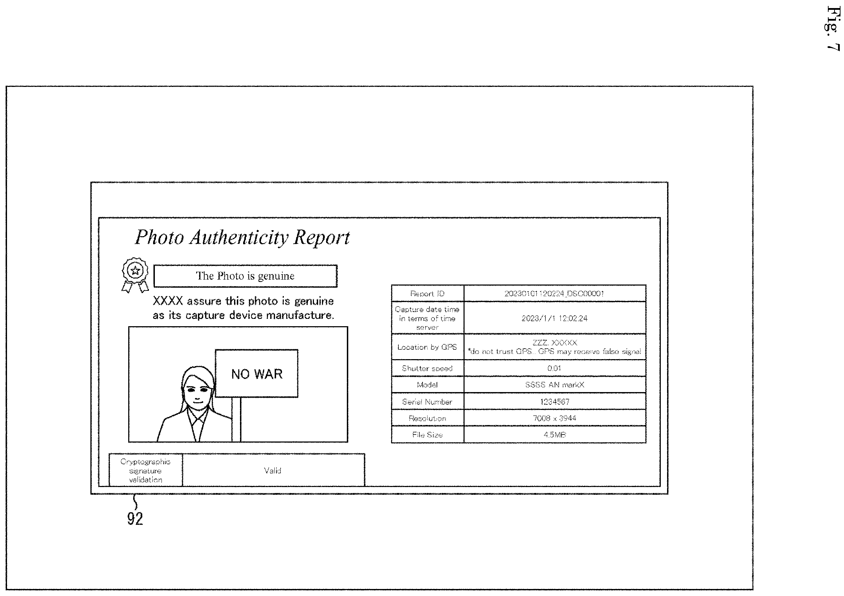

   Fig. 7 is a diagram illustrating an example of a certification web page.
[Fig. 8]

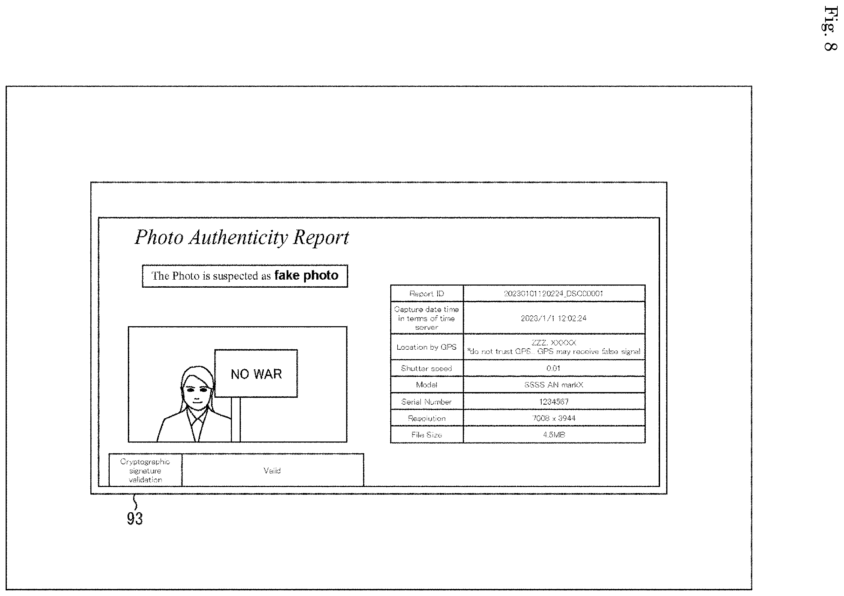

   Fig. 8 is a diagram illustrating an example of a certification web page.
[Fig. 9]

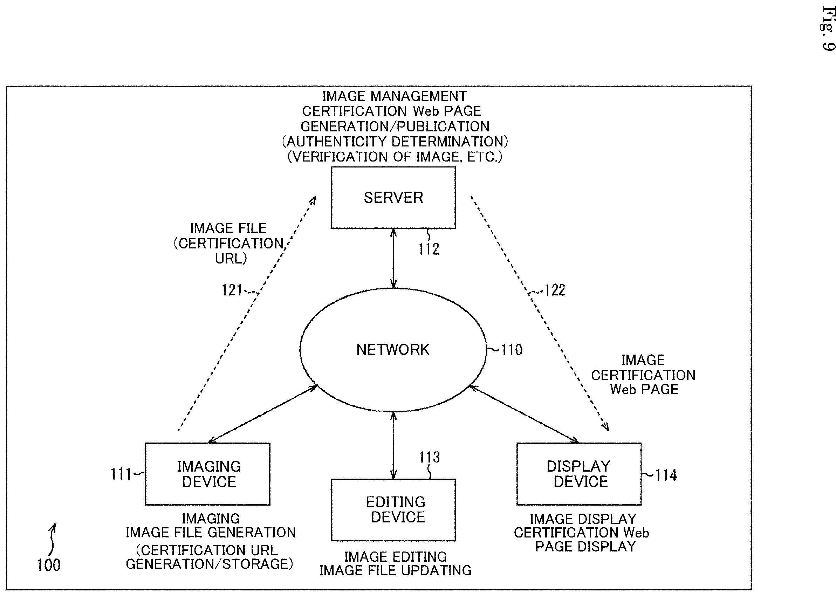

   Fig. 9 is a diagram illustrating an example of the main configuration of an image processing system.
[Fig. 10]

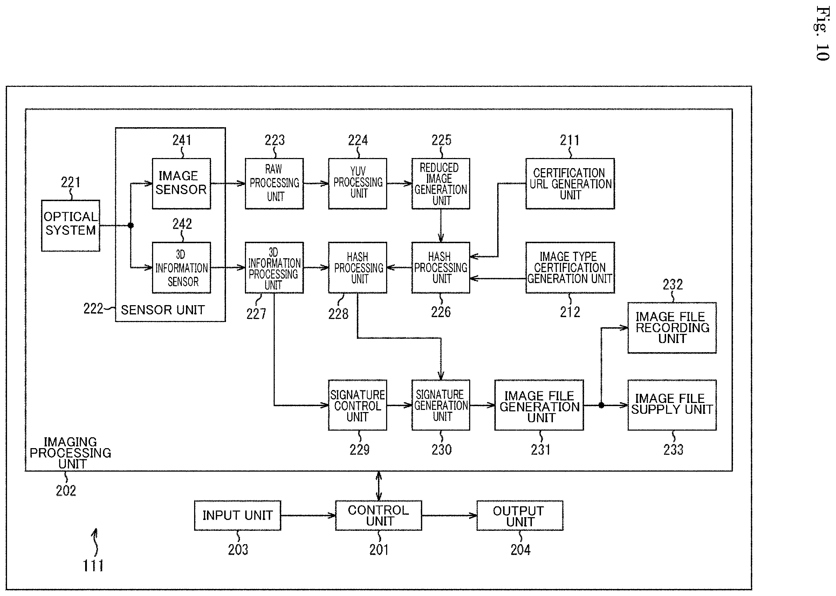

   Fig. 10 is a block diagram illustrating an example of the main configuration of an imaging device.
[Fig. 11]

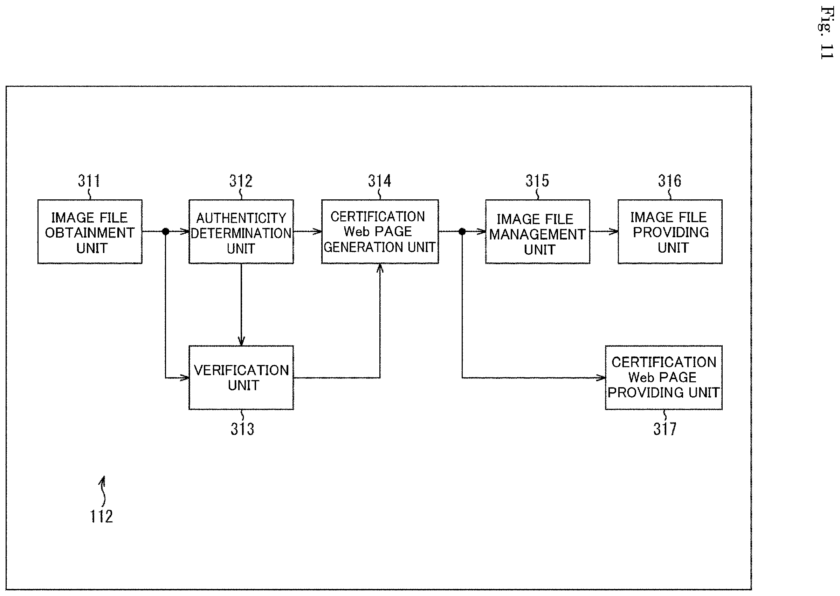

   Fig. 11 is a block diagram illustrating an example of the main configuration of a server.
[Fig. 12]

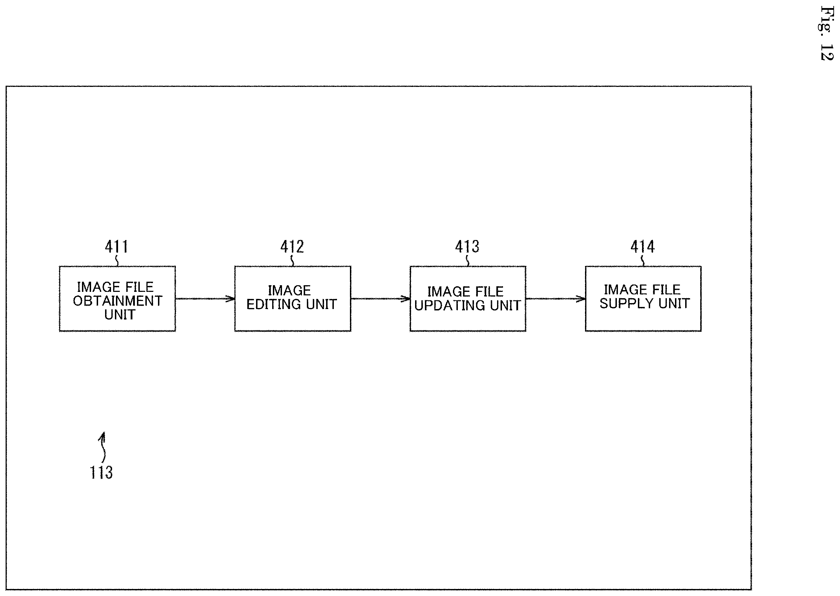

   Fig. 12 is a block diagram illustrating an example of the main configuration of an editing device.
[Fig. 13]

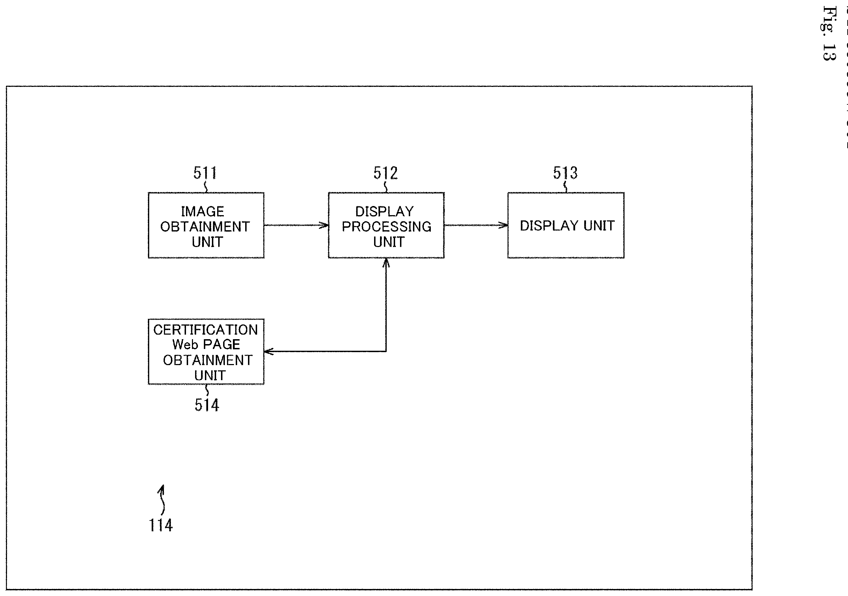

   Fig. 13 is a block diagram illustrating an example of the main configuration of a display device.
[Fig. 14]

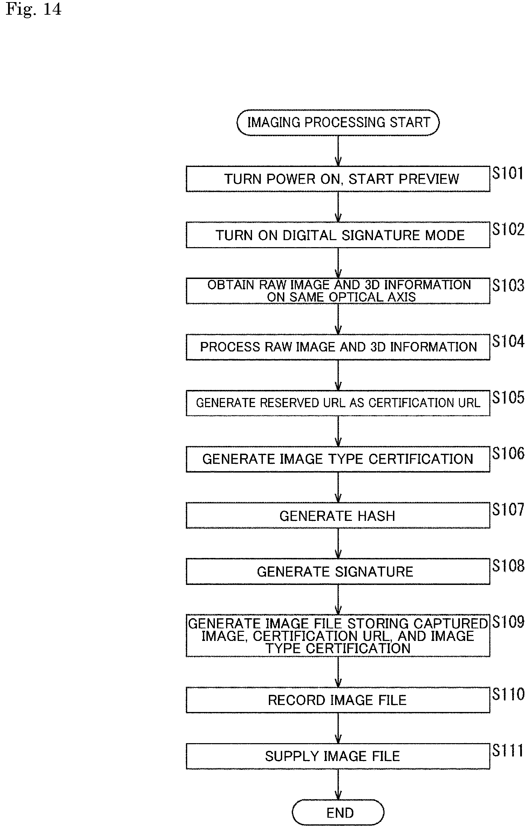

   Fig. 14 is a flowchart illustrating an example of the flow of imaging processing.
[Fig. 15]

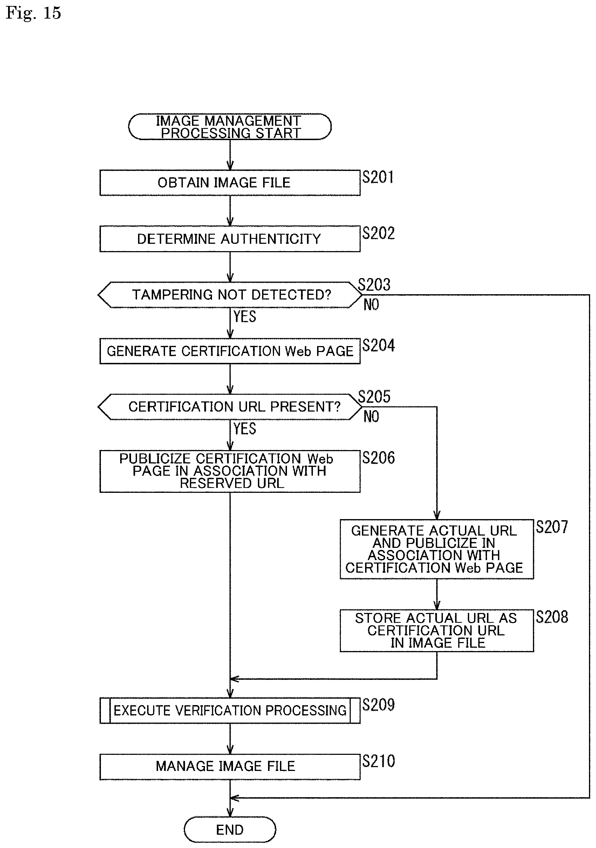

   Fig. 15 is a flowchart illustrating an example of the flow of image management processing.
[Fig. 16]

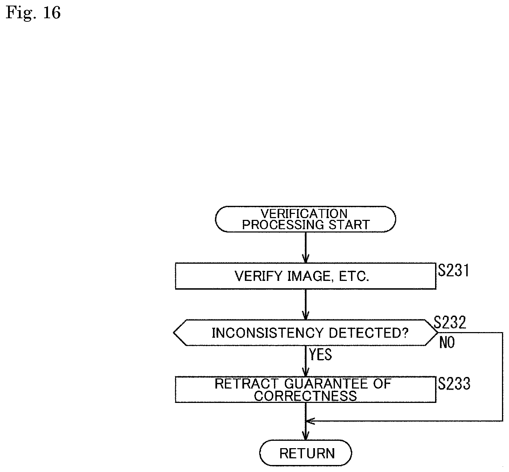

   Fig. 16 is a flowchart illustrating an example of the flow of verification processing.
[Fig. 17]

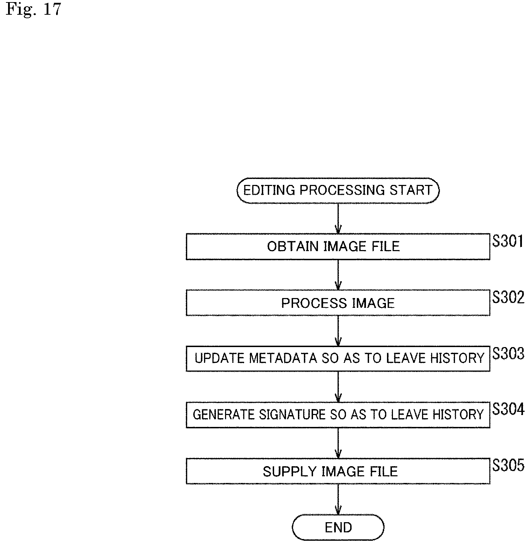

   Fig. 17 is a flowchart illustrating an example of the flow of editing processing.
[Fig. 18]

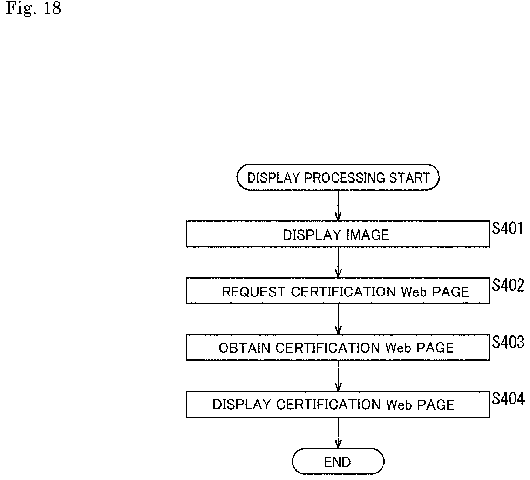

   Fig. 18 is a flowchart illustrating an example of the flow of display processing.
[Fig. 19]

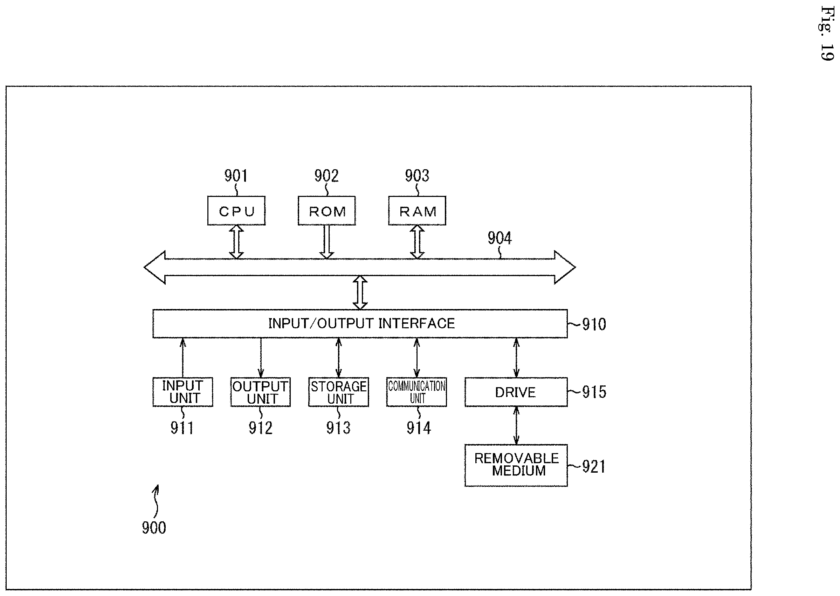

   Fig. 19 is a block diagram illustrating an example of the main configuration of a computer.

### [Description of Embodiments]

Modes for carrying out the present disclosure (hereinafter referred to as "embodiments") will be described below. The descriptions will be given in the following order.
1. Documents that Support Technical Content and Terms
2. Tampering Detection
3. Publicizing Certification Web Page
4. First Embodiment (Image Processing System)
5. Supplementary Notes

### <1. Documents that Support Technical Content and Terms>

The scope disclosed by the present technique is not limited to the content described in the embodiments, and also includes the content described in the following PTL, NPL, and the like that were publicly known at the time of filing, the content of other literature referred to in the following PTL and NPL, and the like.

PTL 1: (see above)
NPL 1: (see above)

In other words, the content of the PTL and NPL, and the content of other literature referred to in the PTL and NPL described above, are also grounds for determining support requirements.

### <2. Tampering Detection>

### <Verification Using Digital Signature>

There is a conventional method that adds a digital signature (also called simply a "signature") to an image when the image is shot, and whether the image has been tampered with can then be detected using the digital signature, as described in PTL 1, for example. A method also exists in which when an image is generated or edited, a history thereof is left with a digital signature such that the history can be traced, such as that disclosed by NPL 1, for example. During editing, the software or server handling the editing confirms the past history of the image using a public key in the image, carries over the digital signature of a past tool and a part of the data to be digitally signed as metadata of the new image, signs the new image with a private key, and adds a corresponding public key.

However, technology used in fraudulent behavior such as tampering with images is becoming more sophisticated every year, and it has been difficult to completely prevent fraudulent behavior regardless of what protection method or verification method is applied. Furthermore, beyond the risk of a specific image being tampered with, such fraudulent behavior has also reduced the reliability of systems that guarantee the genuineness of images.

For example, if the system of an imaging device is accessed without authorization, there is a risk that an image (digital data) generated from analog information will be replaced with a fraudulent image, and a signature will then be generated for the fraudulent image. With such fraudulent behavior, there is a risk that it may be difficult to detect the tampering when verifying using a conventional signature. In such a case, there is a further risk that all of the images generated by the imaging device will be tampered with.

It is therefore desirable to respond to such fraudulent behavior as soon as possible. However, it may be difficult to detect tampering using a conventional verification methods, as in the example described above, and there is a risk that the detection of fraudulent behavior may be delayed. Furthermore, even if tampering is detected when verifying a given image through simple verification on an image-by-image basis, it has been difficult to utilize the result of that verification to verify other images. As a result, there is delay in the system responding to the fraudulent behavior, which leads to the risk of images of questionable genuineness increasing. In other words, there has been a risk that the reliability of guaranteeing the genuineness of the images (the reliability with respect to guaranteeing the correctness) will drop.

### <3. Publicizing Certification Web Page>

### <Method 1>

Accordingly, the genuineness of an image, a digital signature, or the like is set to be certified in a certification web page, and a certification Uniform Resource Locator (URL), which is address information (also called a "path" or a "directory") for publicizing the certification web page, is stored in an image file that stores a first image, as indicated in the top row of the table in Fig. 1.

Here, "web" refers to a system for publicizing and browsing documents used as a standard on the Internet, and "web page" refers to a collection of data that is displayed at once as a single screen in a web browser or the like. For example, the web page may be configured by combining various elements such as text, images, diagrams, audio, video, computer programs, and the like. "Certification web page" is a web page containing information for certifying the genuineness of an image or a digital signature. "Certification URL" refers to a URL at which the certification web page is publicized. Here, "publicize" refers to a state in which the content in question can be provided to a client. In other words, the (content of the) certification web page can be provided to a client by the client accessing the certification URL, for example.

"First image" refers to an unprocessed/unedited image generated from analog information (digital image data). As such, the first image will also be called an "unprocessed image" or an "unedited image". For example, if a first image generation device that generates the first image is an imaging device, the first image may be a captured image generated by capturing an image of a subject. The captured image may be in any format. For example, the captured image may be a RAW image, a YUV image obtained by converting the RAW image, or an encoded image encoded from the YUV image (e.g., a Joint Photographic Experts Group (JPEG) image or the like). Alternatively, if, for example, the first image generation device that generates the first image is a scanner, the first image may be a scanned image generated by scanning a paper document. The scanned image may be in any format. For example, the scanned image may be a Bitmap (BMP) image, a JPEG image, or a Portable Document Format (PDF) image.

For example, a first image processing device may include: a certification URL generation unit that generates a certification URL, the certification URL being address information for publicizing a certification web page that certifies genuineness of an image; and a certification URL storage unit that stores the certification URL in a file that stores a first image, the first image being the image that has been generated from analog information and is unprocessed.

The first image processing device may: generate a certification URL, the certification URL being address information for publicizing a certification web page that certifies genuineness of an image; and store the generated certification URL in a file that stores a first image, the first image being the image that has been generated from analog information and is unprocessed.

Doing so makes it possible to publicize information certifying the genuineness of the image on the certification web page. In other words, an indication that the genuineness of the image cannot be guaranteed (e.g., the detection of fraudulent behavior such as tampering with the image) can be communicated through the certification web page. Accordingly, the detection of fraudulent behavior such as tampering can be communicated to the entire system more quickly than when verification is only performed individually on an image-by-image basis (when reporting the detection of fraudulent behavior is left up to communication by a user or the like). This can be expected to ensure that fraudulent behavior is responded to earlier. A drop in the reliability of guaranteeing the genuineness of the image can therefore be suppressed.

In the following, "processing" and "editing" an image will be described as being equivalent. In other words, a "processed image" is considered to be equivalent to an "edited image", and an "unprocessed image" is likewise considered to be equivalent to an "unedited image".

As described above, the first image may be a captured image. In other words, the first image processing device (e.g., an imaging device) may further include an imaging unit that captures an image of a subject and generates a captured image as the first image. The certification URL storage unit may then store a certification URL in the file that stores the captured image.

Doing so makes it possible for the imaging device to store the certification URL in the file that stores the generated captured image. This makes it possible to suppress a drop in the reliability of guaranteeing the genuineness of the captured image or a processed image based on the captured image.

### <Content of Image File>

Any information may be stored in the image file. For example, an image (also called a "main image"), metadata such as a reduced image, the certification URL, a hash thereof, and a signature thereof may be stored in the image file.

Here, the main image is the first image or a newest image. The newest image is a newest processed image corresponding to the first image. In other words, if the first image is assumed to have been processed N times, "newest image" refers to the image processed the N-th time. The metadata is data associated with the main image, and includes information about the main image. The reduced image is an image in which the image size of the main image is reduced. The reduced image may be any size as long as the size is smaller than the main image. For example, the image may be what is known as a thumbnail, or what is known as a screennail.

The certification URL is address information for publicizing a certification web page corresponding to the main image (i.e., a certification web page in which information for certifying the genuineness of the main image, a digital signature thereof, or the like is provided). The certification URL can therefore also be called metadata of the main image. A hash is generated using the main image, the metadata, the certification URL, and the like. The signature is a digital signature generated using the hash and a private key. In other words, the signature corresponds to the main image, the metadata, the certification URL, and the like.

This information may be generated and stored in an image file, for example. For example, the first image processing device may further include: a first image generation unit that generates the first image; a metadata generation unit that generates metadata of the first image; a hash generation unit that generates a hash using the first image, the metadata, and the certification URL; and a signature generation unit that generates a signature of the first image, the metadata, and the certification URL using the hash. The certification URL storage unit may then generate a file storing the first image, the metadata, the certification URL, the hash, and the signature (an image file).

Fig. 2 is a diagram illustrating an example of the main configuration of an image file. An image area 11, a metadata area 12, a hash area 13, and a signature area 14 are provided in the image file 10 illustrated in Fig. 2. The main image (an image, Exchangeable Image File Format (Exif), or the like) is stored in the image area 11. Metadata of the main image, such as a hash of the image/Exif, a reduced image (a thumbnail, a screennail, or the like), a photographer, or the like, is stored in the metadata area 12, for example. The metadata may be metadata defined by the C2PA standard (C2PA meta), for example. A link to the metadata, a hash, or the like is stored in the hash area 13, for example. A digital signature, a certificate, or the like is stored in the signature area 14, for example.

For example, the first image may be stored in the image area 11 as the main image in the image file 10 configured in this manner. The metadata of the first image may be stored in the metadata area 12. The certification URL corresponding to the main image may be stored in the metadata area 12. A hash generated using these items (the first image, the metadata thereof, and the certification URL) may be stored in the hash area 13. A signature of the first image, the metadata, and the certification URL, generated using the hash and the private key, may be stored in the signature area 14.

Of course, these are merely examples, and any information other than these examples may be stored in the image file. For example, an image type certification may be stored in the image file. Here, the image type certification is information certifying what kind of image the first image is (the type of the image). For example, the image type certification indicates that "the first image is a captured image", "the first image is an image generated by Artificial Intelligence (AI)", or the like. The image type certification may be generated in any manner.

This image type certification may be generated and stored in the image file, for example. For example, the first image processing device may further include an image type certification generation unit that generates the image type certification certifying the type of the first image. The certification URL storage unit may store the image type certification in the file. Storing the image type certification in the image file makes it possible to easily identify what kind of image the first image is in the verification of the image.

Note that information that can identify the first image generation device, a user thereof (the generating party of the first image), or the like may be embedded in the first image. A signature for the first image in which such information is embedded may be generated and stored in the image file. For example, the first image processing device may further include: a first image generation unit that generates the first image; an embedding unit that embeds information specifying a device or a generating party in the first image; and a signature generation unit that generates a signature of the first image in which the information is embedded. Doing so makes it easier to identify the device or user that generated the first image. In addition, the signature can suppress tampering with that information.

### <Image File Format>

The image file may be in any format. For example, the format of the image file may be a format in which information such as metadata is saved for each instance of processing such that a history of the processing performed on the main image can be traced (also called a "history storage format" hereinafter). In the case of the history storage format, information about the first image and information about the image after each instance of processing are stored in the image file. In other words, for example, when the first image is processed, information about the image following that processing is added to the image file while leaving the information from before the processing (i.e., the information about the first image). Then, when the second instance of processing is performed on the processed image, information about the image following the second instance of processing is added to the image file while leaving the information about the first image and information about the image from after the first instance of processing. A signature is generated for each instance of information, which makes it possible to trace the history of the processing on the main image.

Accordingly, the image file in the history storage format may include, for example, the newest image, the newest metadata, the certification URL, the newest hash, the newest signature, and information about each instance of processing. The newest image is the newest post-processing main image. The newest metadata is metadata corresponding to the newest image. The newest hash is a hash generated using the newest image, the newest metadata, and the certification URL. The newest signature is a signature of the newest image, the newest metadata, and the certification URL, generated using the newest hash and the private key. The information for each instance of processing includes the information about the image from before or after each instance of processing.

Fig. 3 illustrates an example of the main configuration of an image file in a history storage format. An image file 20 illustrated in Fig. 3 is an example of a configuration in which the first image stored in the image file 10, illustrated in Fig. 2, has been processed twice.

In this case, the image file 20 has an image area 21, a metadata area 22-1, a hash area 23-1, a signature area 24-1, a metadata area 22-2, a hash area 23-2, a signature area 24-2, a metadata area 22-3, a hash area 23-3, and a signature area 24-3. In the following descriptions, when the metadata area 22-1, the metadata area 22-2, and the metadata area 22-3 are not distinguished from one another, those areas will also be called "metadata areas 22". Likewise, when the hash area 23-1, the hash area 23-2, and the hash area 23-3 are not distinguished from one another, those areas will also be called "hash areas 23". Furthermore, when the signature area 24-1, the signature area 24-2, and the signature area 24-3 are not distinguished from one another, those areas will also be called "signature areas 24".

The image area 21 is an area that stores the main image, in the same manner as the image area 11 (Fig. 2). The newest image is stored in the image area 21. In other words, a secondary edited image (an image, Exif, and the like) resulting from two edits to the captured image is stored in the image area 21.

The metadata area 22 is an area that stores the metadata and the like of the main image, in the same manner as the metadata area 12 (Fig. 2). The hash area 23 is an area that stores a link to the metadata, a hash, and the like, in the same manner as the hash area 13 (Fig. 2). The signature area 24 is an area that stores a digital signature, a certificate, or the like, in the same manner as the signature area 14 (Fig. 2).

Information about the first image is stored in the metadata area 22-3, the hash area 23-3, and the signature area 24-3. In other words, the metadata of the first image (e.g., the hash of the image/Exif, a reduced image, the photographer, and the like) is stored in the metadata area 22-3. The certification URL is also stored in the metadata area 22-3. A link to the metadata stored in the metadata area 22-3 and a hash are stored in the hash area 23-3. The signature generated using the information in the hash area 23-3 (the hash of the image and the metadata, and the like) and the private key (the signature corresponding to the first image), a certificate (a public key corresponding to the private key used to generate the signature), and the like are stored in the signature area 24-3.

Information corresponding to a primary edited image resulting from an edit to the first image is stored in the metadata area 22-2, the hash area 23-2, and the signature area 24-2. In other words, the metadata of the primary edited image (e.g., the hash of the image/Exif, a reduced image, information about the primary edit, and the like) is stored in the metadata area 22-2. A link to the metadata stored in the metadata area 22-2 and a hash are stored in the hash area 23-2. The signature generated using the information in the hash area 23-2 (the hash of the image and the metadata, and the like) and the private key (the signature corresponding to the primary edited image), a certificate (a public key corresponding to the private key used to generate the signature), and the like are stored in the signature area 24-2.

Information corresponding to the secondary edited image resulting from an edit to the primary edited image is stored in the metadata area 22-1, the hash area 23-1, and the signature area 24-1. In other words, the metadata of the secondary edited image (e.g., the hash of the image/Exif, a reduced image, information about the secondary edit, and the like) is stored in the metadata area 22-1. A link to the metadata stored in the metadata area 22-1 and a hash are stored in the hash area 23-1. The signature generated using the information in the hash area 23-1 (the hash of the image and the metadata, and the like) and the private key (the signature corresponding to the secondary edited image), a certificate (a public key corresponding to the private key used to generate the signature), and the like are stored in the signature area 24-1.

In other words, when a single edit is added, the main image in the image area 21 is updated to the newest image, and the metadata area 22, the hash area 23, and the signature area 24 corresponding to that newest image are added to the image file 20. Information of the original image (the image from before the editing) is referenced from the information in the hash area 23. In this manner, the information is stored in the image file 20 as a history for each edit. A signature for each edit is stored as well. Accordingly, the user can confirm the history of edits to the image by executing verification using the signature on the image file 20 having such a configuration.

Note that the image file may be generated in such a history storage format when the first image generation device generates the image file. Alternatively, another device that is different from the first image generation device (e.g., a server that manages images) may convert an image file that is not in the history storage format to the history storage format (i.e., a format in which the history can be proven). The format of the image file may be converted at any time as long as such format conversion is possible. For example, the format of the image file may be converted to the history storage format before the primary edit is made. For example, the format of the image file may be converted to the history storage format when the certification URL is stored in the image file before the primary edit is made.

### <Hash>

The hash stored in the image file may have any configuration. For example, the hash corresponding to the signature may have a multi-level configuration. In other words, the hash corresponding to the signature may be generated by generating hashes for the information such as the image, the metadata, and the like in multiple. For example, the hash corresponding to the signature is given a three-level configuration by generating a first hash using the information such as the image and the metadata, generating a second hash using the first hash, generating a third hash using the second hash, and generating the signature using the third hash.

The hashes in the lower layers of the hash having such a multi-level configuration may be multihashes. A multihash is constituted by a plurality of mutually-independent hashes. In other words, a single hash in an upper level may be generated using a plurality of hashes from the lower levels. By dividing the hash into a plurality of pieces, even if some information is missing, the remaining information can be verified. In other words, using a multihash enables partial verification within an image file.

In addition, if the image type certification mentioned above is stored in an image file, a single hash may be generated using the certification URL and the image type certification when generating the multihash. Using such a configuration for the hash makes it possible to ensure that the genuineness of the image type certification cannot be guaranteed if the certification URL has been deleted or tampered with.

For example, in the first image processing device, the hash generation unit may generate a plurality of partial hashes including one partial hash corresponding to the certification URL and the image type certification; and may generate a single hash corresponding to the first image, the metadata, and the certification URL using the plurality of partial hashes, the single hash being the hash.

Fig. 4 illustrates an example of the configuration of the hash in this case. In the example in Fig. 4, information such as the certification URL, the image type certification, other metadata, and the image are stored in the image file. Among this data, a hash A is generated using the certification URL and the image type certification. A hash B and a hash C are generated using other metadata. A hash D is generated using the image. The hash E is then generated using the hash A, the hash B, the hash C, and the hash D. The signature is then generated using the hash E. Doing so makes it possible to use a multi-level configuration for the hash (a level for the hash E, and levels for the hash A to the hash D). In addition, the hash of the lower level can be a multihash (the hash A to the hash D). The certification URL and the image type certification can also be associated with a single hash A.

### <Certification URL>

### <Method 1-1>

The certification URL may be stored in the image file at any time. For example, the certification URL may be stored before the certification web page is generated. For example, the first image generation device may generate and store the certification URL when generating the image file. In this case, the certification URL for the certification web page that has not yet been generated (a certification web page that does not yet exist) is stored in the image file. In the following, the certification URL corresponding to the certification web page not yet generated will also be called a "reserved URL". In other words, when Method 1 described above is applied, the reserved URL may be stored in the image file as the certification URL, as indicated in the second row from the top of the table in Fig. 1 (Method 1-1).

For example, in the first image processing device, the certification URL generation unit may generate a reserved URL, which is the certification URL for the certification web page that has not yet been generated. The certification URL storage unit may store the reserved URL in the file as the certification URL. Doing so makes it possible to generate an image file including the certification URL before the certification web page is generated.

The reserved URL need not actually exist at this point in time. In other words, the reserved URL may be set on the server before the certification web page is publicized. If the reserved URL exists when the certification web page is publicized, the server can publicize the certification web page at the reserved URL. In other words, an address that does not yet exist may be stored in the image file as the certification URL (the reserved URL). For example, the first image generation device may generate the reserved URL using a known domain where the certification web page will be publicized, a serial number assigned to the first image generation device, a predetermined number, and the like, and may store the reserved URL in the image file.

### <Method 1-2>

The certification URL may be stored in the image file after the certification web page is generated. For example, a server that manages images and a server that publicizes a certification web page may generate a certification web page corresponding to the image file, set a certification URL corresponding to the certification web page, and store the certification URL in the image file. In this case, the certification URL for a certification web page that actually exists is stored in the image file. In the following, the certification URL corresponding to the certification web page that actually exists will also be called an "actual URL". In other words, when Method 1 described above is applied, the actual URL may be stored in the image file as the certification URL, as indicated in the third row from the top of the table in Fig. 1 (Method 1-2).

### <Certification URL Storage Location>

Note that the certification URL may be stored in any area of the image file. For example, the certification URL may be stored in an area of the image file where the certification URL is propagated even after the image is edited. For example, in the first image processing device, the certification URL storage unit may store the certification URL in an area of the file that is propagated even after the image is edited. The certification URL may be stored in the metadata area, for example, as in the example of the image file 10 (Fig. 2) or the image file 20 (Fig. 3). Doing so makes it possible to publicize information certifying the genuineness of the image on the certification web page, even after the image is edited.

Although the "area that is propagated even after the image is edited" may be any area, the area may, for example, be a vendor extension area (Vendor Extension), within the metadata area that stores the metadata, that can be extended by a vendor. For example, an image area (Main image) 71, a metadata (C2PA meta) area 72, and a vendor extension area (Vender Extension) 73 are provided in an image file 70 illustrated in Fig. 5. App 81, which is a segment in which application data is stored, is then provided in the vendor extension area 73. For example, the certification URL may be stored in app 81.

Note that a new dedicated area for storing the certification URL may be provided in the image file to be propagated by the history.

### <Generating Certification Web Page>

The certification web page may be generated in any manner. For example, a server that publicizes certification web pages may obtain an image file, generate a certification web page corresponding to the image file, and publicize the certification web page at the certification URL. The server may also manage image files and provide the image files to clients.

For example, a second image processing device (e.g., a server) may include: a file obtainment unit that obtains a file storing an image; a certification web page generation unit that generates a certification web page, the certification web page certifying genuineness of the image; and a certification web page publicizing unit that publicizes the certification web page at a certification URL.

Additionally, the second image processing device (e.g., a server) may obtain a file that stores an image, generate a certification web page that certifies genuineness of the image, and publicize the certification web page at a certification URL.

Doing so makes it possible to publicize information certifying the genuineness of the image on the certification web page. In other words, an indication that the genuineness of the image cannot be guaranteed (e.g., the detection of fraudulent behavior such as tampering with the image) can be communicated through the certification web page. Accordingly, the detection of fraudulent behavior such as tampering can be communicated to the entire system more quickly than when verification is only performed individually on an image-by-image basis (when reporting the detection of fraudulent behavior is left up to communication by a user or the like). This can be expected to ensure that fraudulent behavior is responded to earlier. A drop in the reliability of guaranteeing the genuineness of the image can therefore be suppressed.

For example, when Method 1-1 described above is applied, the certification web page may be published at the reserved URL stored in the image file. The reserved URL stored in the image file may be replaced with the short URL. For example, in the second image processing device, a reserved URL generated for the certification web page that has not yet been generated may be stored in the file as the certification URL. The certification web page publicizing unit may then set the reserved URL and publicize the certification web page at the reserved URL. The second image processing device may also include a certification URL storage unit that generates a short URL indicating the reserved URL stored in the image file, and stores the generated short URL as the certification URL in the image file instead of the reserved URL. In other words, the certification URL storage unit may replace the reserved URL stored in the image file with a short URL indicating the reserved URL.

Doing so makes it possible for the server to publicize the certification web page corresponding to the image file. The server can also store the short URL, which is shorter than the reserved URL, in the image file.

Additionally, when Method 1-2 described above is applied, the server may generate and set the actual URL, publicize a certification web page at the actual URL, and store the actual URL in the image file. The server may also store the short URL in the image file instead of the actual URL. For example, in a second image processing device, the certification web page publicizing unit may generate a certification URL for the certification web page, set the generated certification URL, and publicize the certification web page at the set certification URL. The second image processing device may further include a certification URL storage unit that stores the certification URL in the file. Additionally, the second image processing device may include a certification URL storage unit that generates a short URL indicating an alternative address to an address at which the certification web page is publicized, and stores the generated short URL as the certification URL in the image file.

By doing so, even if the certification URL is not stored in the image file, the server can associate the image file with the certification web page by storing the certification URL in the image file. In other words, the server can publicize the certification web page corresponding to the image file. The server can also store the short URL, which is shorter than the actual URL, in the image file.

### <Updating Certification Web Page>

The information in the certification web page may be updated as necessary. For example, the information may be updated each time the image is edited. Any method may be used for the update. For example, each time the image is edited, the server may dynamically generate and replace the certification web page. In other words, in this method, the entire publicized certification web page is updated. Doing so makes it possible to suppress the complexity of the updating process.

The server may also generate a static certification web page for the first image, and after the image is edited, the existing certification web page may be updated to reflect the results of the editing. In other words, in this method, only the part of the publicized certification web page where the information is to be updated is updated. Doing so makes it possible to suppress an increase in the amount of information being updated, which makes it possible to suppress an increase in the load on the server with respect to the update processing.

### <Providing Certification Web Page>

The certification web page may be provided (and displayed) in any manner. For example, a client (display device) may access the certification URL, the server may supply the certification web page in response to that request (i.e., accessing the certification URL), and the client (display device) may display the certification web page supplied.

In that case, when requesting the certification web page, the client (display device) may access the certification URL by referring to the certification URL stored in the image file, for example. In that case, the client may, for example, communicate with the first image generation device (e.g., the imaging device) to obtain the image file from the first image generation device. The client may also communicate with a server that manages image files to obtain that image file from the server. The client may also obtain that image file from a recording medium.

The client (display device) may also access a certification URL posted on a service such a Social Network Site (SNS). For example, the owner of the image file (e.g., the party that generated the first image) or the like uploads the image or certification URL to a server that provides the SNS. The client refers to the image or certification URL via the SNS and accesses the certification URL. For example, the client obtains and displays a page 91 of the SNS on which the image has been posted, as illustrated in Fig. 6. An image 91A is displayed on this page 91. The image 91A is also associated with a link of the certification URL, and, for example, when a user of the client clicks on the image 91A, the client accesses the certification URL and obtains and displays the certification web page, such as that illustrated in Figs. 7 and 8. Using an SNS in this manner makes it possible for the client to access the certification URL more easily.

### <Content of Certification Web Page>

Note that any information may be included in the certification web page. For example, the certification web page may include a target image, metadata of the image, and information about the genuineness of the image. For example, in a second image processing device, the certification web page generation unit may generate the certification web page including an image, metadata of the image, and information about genuineness of the image.

Fig. 7 is a diagram illustrating an example of the main configuration of the certification web page. A certification web page 92 illustrated in Fig. 7 shows a Photo Authenticity Report. The certification web page 92 illustrates an example of a case where a photograph is guaranteed to be genuine. For example, a target image (photo) and a verification result thereof are shown on the left side of the certification web page 92. For example, "The Photo is genuine" is displayed, and the photograph displayed under that text is therefore guaranteed to be genuine. In addition, "XXXX assure this photo is genuine as its capture device manufacture." is displayed, indicating that XXXX guarantees that the photo is genuine by the manufacturer of the capture device. In addition, the result of verifying a cryptographic signature is shown as being valid.

The metadata of the target image (the photo) is also shown on the right side of the certification web page 92. For example, information such as a date and time obtained from a time server, position information from a Global Positioning System (GPS), the shutter speed, model, serial number, photo resolution, file size, and the like are displayed.

A certification web page 93 illustrated in Fig. 8 shows a Photo Authenticity Report, in the same manner as the certification web page 92. The certification web page 93 illustrates an example of a case a photograph is suspected to be fake. For example, a target image (photo) and a verification result thereof are shown on the left side of the certification web page 93. For example, "The Photo is suspected as fake photo" is displayed, indicating that the photo displayed under that text is suspected of being a fake photo.

### <Data Format of Certification Web Page>

Note that the data format of the certification web page to be publicized may be any format. For example, the information may be information which can be read by a person. For example, the information may be information that can be displayed as text data, such as image information, HyperText Markup Language (HTML), or the like.

The information may also be information which can be read by software. For example, client software may interpret the content of the certification web page, perform operations, and the like, and generate and present information for display.

### <Image Authenticity Determination and Display of Result>

### <Method 1-3>

When generating or updating the certification web page, the authenticity of the image may be determined, and the result of determining the authenticity may be reflected in the certification web page. In other words, when Method 1 described above is applied, an image authenticity determination may be made, and a result of the authenticity determination may be reflected in the certification web page, as indicated in the fourth row from the top of the table in Fig. 1 (Method 1-3).

For example, the second image processing device may further include an authenticity determination unit that makes a determination as to authenticity of the image using a signature of the image. The certification web page generation unit may generate a certification web page including a result of the determination.

For example, in the certification web page 92 (Fig. 7) and the certification web page 93 (Fig. 8), an indication that a result of verifying a cryptographic signature is valid (Cryptographic signature validation: Valid) is provided on the lower-left. Doing so makes it possible to publicize the result of determining the authenticity of the image.

### <Verification of Image, Etc. and Display of Result>

### <Method 1-4>

The image or the like may be verified, and the result of that verification may be reflected in the certification web page. In other words, when Method 1 described above is applied, the image or the like may be verified, and the verification result may be reflected in the certification web page, as indicated in the bottom row of the table in Fig. 1 (Method 1-4).

For example, the second image processing device may further include a verification unit that makes a verification of the genuineness of the image using metadata. The certification web page generation unit may generate a certification web page including a result of the verification.

For example, in the certification web page 92 (Fig. 7), "The Photo is genuine" is displayed in the upper-left, and the photograph displayed under that text is therefore guaranteed to be genuine. In the certification web page 93 (Fig. 8), "The Photo is suspected as fake photo" is displayed at the upper-left, indicating that the photo displayed under that text is suspected of being a fake photo. Doing so makes it possible to publicize the result of verifying the image.

### <Verification of Image, Etc.>

Any method may be used to verify the image or the like. For example, the unnaturalness of the image in the image file may be detected as the verification of the image or the like. The image and the metadata may also be compared. Items of metadata may be compared with each other (including debug information representing the characteristics of the image).

Any device may verify the image or the like. For example, the device (a server or the like) that generates the certification web page may verify the image or the like. The first image generation device (e.g., the imaging device) may verify the image or the like and store the verification result in the image file.

### <Responding to Fraud Detection>

If an inconsistency is detected in the verification of the image or the like (i.e., if fraud is detected), other processing may be performed in addition to (or instead of) reflecting the inconsistency in the certification web page.

For example, a display indicating "no problems" regarding the genuineness may be switched to a display indicating "suspicious" or the like in the certification web page for another image associated with the same device, the same photographer, or the like, in addition to the indication that fraud has been detected. For example, in the second image processing device, the certification web page generation unit may also reflect the result of the verification in the certification web page of another image corresponding to the image, when an inconsistency is detected in the verification.

Additionally, a verification result screen or the return value from an Application Program Interface (API) for the image in which the fraud was detected may be used to notify the requestor of the verification processing. For example, in the second image processing device, the certification web page generation unit may notify a requestor that requested the verification of the result of the verification.

A party registered through email, the API, or the like may also be notified of the image and other images related to the image. For example, in the second image processing device, the certification web page generation unit may notify a predetermined user of the result of the verification. At that time, for example, the notification of the detection result may be provided immediately after the detection, or at a predetermined timing (e.g., after waiting for a predetermined period of time).

### <Combinations>

The methods described above in <3. Publicizing Certification Web Page> may be applied in combination with any other desired method as long as no conflicts arise. Three or more methods may be applied in combination. For example, any two or more of Method 1-1 to Method 1-4 may be applied in combination. The methods which can be combined may include not only those indicated in the table in Fig. 1 as "methods", but also all of the elements described above in <3. Publicizing Certification Web Page>. The methods described above may also be applied in combination with methods other than those described above.

Note that the descriptions given herein for the higher-level methods apply to the lower-level methods belonging thereto, as long as no conflicts arise. For example, "Method 1 may be applied" means that each of Method 1-1 to Method 1-4 can be applied.

### <4. First Embodiment>

### <Image Processing System>

The present technique can be applied in an image processing system that processes captured images (or in devices constituting the system). Fig. 9 is a system diagram illustrating an example of the configuration of an image processing system to which the present technique is applied. An image processing system 100 illustrated in Fig. 9 is a system that processes captured images.

Note that Fig. 9 illustrates the main device configurations, data flows, and the like, and the items illustrated in Fig. 9 are not necessarily all the items. In other words, devices not illustrated in Fig. 9 may be present in the image processing system 100, and processing and data flows not indicated as arrows or the like in Fig. 9 may be present.

As illustrated in Fig. 9, the image processing system 100 includes an imaging device 111, a server 112, and editing device 113, and a display device 114 communicably connected to each other over a network 110. Note that in Fig. 9, one each of the imaging device 111, server 112, the editing device 113, and the display device 114 are illustrated, but the numbers thereof may be any number. In other words, there may be two or more each of the imaging device 111, the server 112, the editing device 113, and the display device 114. In addition, the numbers of each of the imaging device 111, the server 112, the editing device 113, and the display device 114 need not be the same as one another. In addition, although one network is illustrated as the network 110 in Fig. 9, the image processing system 100 may include a plurality of networks.

The network 110 is a communication network that serves as a communication medium among the devices. The network 110 may be a wired communication network, a wireless communication network, or may include both. For example, the network 110 may be a wired Local Area Network (LAN), a wireless LAN, a public telephone network, a wide-area communication network for wireless mobile devices such as what is known as a 4G network, a 5G network, or the like, or the Internet, or may be a combination thereof. The network 110 may also be a single communication network, or may be a plurality of communication networks. Additionally, for example, the network 110 may be configured, in part or in whole, with a predetermined standard of communication cables, such as, for example, a Universal Serial Bus (USB) (registered trademark) cable, a High-Definition Multimedia Interface (HDMI) (registered trademark) cable, or the like.

The imaging device 111 performs processing pertaining to capturing an image of a subject, i.e., generating a captured images (image file). For example, the imaging device 111 may capture an image of a subject and generate a captured image. The imaging device 111 may generate an image file that stores the captured image and the like. The imaging device 111 may generate a certification URL (reserved URL) and store that URL in the image file. The imaging device 111 may supply the image file over the network 110 or through a recording medium.

The server 112 performs processing pertaining to the certification web page. For example, the server 112 may manage and provide image files. The server 112 may generate the certification web page. The server 112 may set the certification URL and publicize the certification web page at that certification URL. The server 112 may generate the certification URL (an actual URL) and store that URL in the image file. The server 112 may determine the authenticity of the image. The server 112 may publicize the result of determining the authenticity on the certification web page. The server 112 may verify the image or the like. The server 112 may publicize the result of the verification on the certification web page.

The editing device 113 performs processing related to editing images. For example, the editing device 113 may obtain an image file. The editing device 113 may process the image stored in the image file. The editing device 113 may update the information stored in the image file in response to the image being edited, while saving a history of the image editing. The editing device 113 may supply the edited image file over the network 110 or through a recording medium.

The display device 114 performs processing pertaining to the display of images. For example, the display device 114 may display the image stored in the image file. The display device 114 may obtain and display the certification web page corresponding to that image.

The imaging device 111, the server 112, the editing device 113, and the display device 114 may communicate and exchange information over the network 110. For example, the imaging device 111 may supply (upload) an image file to the server 112, as indicated by the dotted line double-headed arrow 121. The server 112 may also supply (download) an image file or certification web page to the display device 114, as indicated by the dotted line double-headed arrow 122.

### <Imaging Device>

The imaging device 111 is constituted by an information processing terminal device having an imaging function, such as a digital camera, a smartphone, a tablet terminal, or a laptop personal computer, for example. The imaging device 111 may be constituted by a single device (electronic device), or may be constituted by a plurality of devices (electronic devices). For example, the imaging device 111 may be constituted by a digital camera and a smartphone. In that case, for example, the digital camera may generate the captured image, and the smartphone may generate the signatures, supply the signatures to the server 112, and the like. The imaging device 111 will be described as being constituted by a single device (electronic device) in the following.

Fig. 10 is a block diagram illustrating an example of the configuration of the imaging device 111 serving as one aspect of an image processing device to which the present technique is applied.

Note that Fig. 10 illustrates the main processing units, data flows, and the like, and the items illustrated in Fig. 10 are not necessarily all the items. In other words, the imaging device 111 may include processing units not illustrated as blocks in Fig. 10, and processing and data flows not indicated as arrows or the like in Fig. 10.

As illustrated in Fig. 10, the imaging device 111 includes a control unit 201, an imaging processing unit 202, an input unit 203, and an output unit 204. The control unit 201 controls each of the processing units in the imaging processing unit 202. The imaging processing unit 202 performs processing pertaining to imaging under the control of the control unit 201. The input unit 203 includes an input device such as buttons or switches, for example. The input unit 203 accepts the input of instructions from a user or the like through the input device. The input unit 203 supplies the received instructions to the control unit 201. The control unit 201 may control the imaging processing unit 202 on the basis of the received instructions and the like. The output unit 204 includes an output device such as a monitor or a speaker, for example. The output unit 204 outputs information supplied by the control unit 201 through the output device as an image, audio, or the like, for example. The control unit 201 may supply and output any desired information, such as control results and the like, for example, to the output unit 204.

The imaging processing unit 202 includes a certification URL generation unit 211, an image type certification generation unit 212, an optical system 221, a sensor unit 222, a RAW processing unit 223, a YUV processing unit 224, a reduced image generation unit 225, an image information addition unit 226, a 3D information processing unit 227, a hash processing unit 228, a signature control unit 229, a signature generation unit 230, an image file generation unit 231, an image file recording unit 232, and an image file supply unit 233.

The certification URL generation unit 211 executes processing pertaining to the generation of certification URLs. For example, the certification URL generation unit 211 may generate a reserved URL as the certification URL before the certification web page is generated. The certification URL generation unit 211 may supply the generated certification URL (reserved URL) to the image information addition unit 226.

The image type certification generation unit 212 executes processing pertaining to the generation of an image type certification. For example, the image type certification generation unit 212 may generate an image type certification indicating whether the first image is a captured image, a scanned image, an AI-generated image, or the like. The image type certification generation unit 212 may supply the generated image type certification to the image information addition unit 226.

The optical system 221 is constituted by optical elements such as lenses, mirrors, filters, aperture stops, and the like, for example, which exert predetermined effects on light rays from a subject and guide the light rays to the sensor unit 222. In other words, light rays from the subject are incident on the sensor unit 222 through the optical system 221.

The sensor unit 222 performs processing pertaining to photoelectric conversion. The sensor unit 222 includes an image sensor 241 and a 3D information sensor 242. For example, the sensor unit 222 may generate captured images, 3D information, and the like using the light rays from the subject incident through the optical system 221.

The image sensor 241 performs processing pertaining to the generation of captured images. The image sensor 241 has a pixel array in which pixels, each having a photoelectric conversion element, are arranged in a matrix. For example, the image sensor 241 may receive the light rays from the subject incident through the optical system 221 on the pixel array and generate a captured image (a RAW image or a Joint Photographic Experts Group (JPEG) image generated from the RAW image) through photoelectric conversion. In other words, the image sensor 241 captures an image of the subject and generates a captured image of the subject, and can therefore also be called an "imaging unit" or a "captured image generation unit". The captured image is also the first image, and the image sensor 241 can therefore also be called a "first image generation unit". Additionally, the image sensor 241 may supply the generated captured image to the RAW processing unit 223.

The 3D information sensor 242 detects distance-related information, for a plurality of locations within the captured image obtained by the image sensor 241, along the same optical axis as the captured image, and generates the 3D information. In other words, the 3D information sensor 242 can also be called a "3D information generation unit". For example, the 3D information sensor 242 includes a predetermined sensor device that detects the distance-related information. The 3D information sensor 242 receives the light rays from the subject incident through the optical system 221 on that sensor device, detects the distance-related information, and generates the 3D information.

Here, "the same optical axis" means that the light rays from the subject incident on the 3D information sensor 242 pass through the optical system 221 through which the light rays from the subject incident on the image sensor 241 pass. In other words, this means that the paths of the light rays incident on the image sensor 241 and the light rays incident on the 3D information sensor 242 are the same at least from the subject to the sensor unit 222. Detecting the captured image and the distance-related information on the same optical axis in this manner makes it difficult to perform trick photography such as, for example, capturing a facial photograph or the like and detecting the distance to a person other than the subject in the facial photograph. In other words, it is highly likely that the subject of the captured image and the subject of the 3D information are the same as each other.

The "distance-related information" may also be information indicating a distance from the imaging device 111 (the 3D information sensor 242) to the subject, or information for deriving that distance. For example, the distance-related information may include a depth map, phase difference data, Time of Flight (ToF) data, a collection of parallax images, or the like.

The 3D information sensor 242 supplies the generated 3D information to the 3D information processing unit 227.

Although the image sensor 241 and the 3D information sensor 242 are configured as separate entities in Fig. 7, the image sensor 241 and the 3D information sensor 242 may be integrated, and the image sensor 241 may also serve as the 3D information sensor 242. For example, if the distance-related information is ToF data, the 3D information sensor 242 may be constituted by a ToF sensor, separate from the image sensor 241, that measures the distance through the ToF method. Additionally, if the distance-related information is phase difference data, the 3D information sensor 242 may be constituted by image plane phase detection pixels formed in an effective pixel region of the pixel array of the image sensor 241. An image plane phase detection pixel is a pixel used in a phase difference-based focus (autofocus) function, and phase difference data can be detected. In this case, the image sensor 241 and the 3D information sensor 242 are formed as an integrated entity. Additionally, the 3D information sensor 242 may be constituted by a phase difference sensor, separate from the image sensor 241, that detects phase difference data. If the distance-related information is a collection of parallax images generated by 3D sweep panoramic photography or the like, the image sensor 241 also serves as the 3D information sensor 242. In other words, in this case, the image sensor 241 generates the captured image and the 3D information, and the 3D information sensor 242 may be omitted.

Unless mentioned otherwise, the following will describe an example in which the 3D information sensor 242 is constituted by image plane phase detection pixels. In other words, a case where phase difference data is detected by the 3D information sensor 242 as the distance-related information will be described as an example.

The RAW processing unit 223 performs processing pertaining to RAW images. For example, the RAW processing unit 223 may obtain a captured image supplied from the image sensor 241 (a RAW image). The RAW processing unit 223 may perform predetermined processing on the RAW image. The processing may be any type of processing. For example, the processing may be white balance correction or the like. The RAW processing unit 223 may supply the processed RAW image to the YUV processing unit 224.

The YUV processing unit 224 performs processing pertaining to the generation of YUV images. For example, the YUV processing unit 224 may obtain a RAW image supplied from the RAW processing unit 223. The YUV processing unit 224 may convert that RAW image into a YUV image. The YUV processing unit 224 may encode that YUV image and convert the YUV image into a JPEG image. The YUV processing unit 224 may supply the generated JPEG image to the reduced image generation unit 225. Note that when the image sensor 241 outputs a JPEG image as the captured image, the RAW processing unit 223 and the YUV processing unit 224 may be omitted, and the image sensor 241 may supply a JPEG image to the reduced image generation unit 225.

The reduced image generation unit 225 performs processing pertaining to the generation of a reduced image corresponding to the main image. For example, the reduced image generation unit 225 may obtain a JPEG image (the main image) supplied from the YUV processing unit 224. The reduced image generation unit 225 may generate a reduced image of that JPEG image (the main image). Any method may be used to generate the reduced image. For example, the reduced image generation unit 225 may generate a reduced image by thinning out some pixel values in the main image. The reduced image generation unit 225 may generate the reduced image by combining pixel values for each of predetermined partial areas of the main image to reduce the number of pixels. The reduced image generation unit 225 may generate the reduced image in view of all the pixels in the main image. If the number of taps is insufficient, the reduced image generation unit 225 may generate the reduced image at the desired reduced magnification by repeating the reduction at a magnification that provides the sufficient number of taps. The reduced image generation unit 225 may associate the generated reduced image with the main image (the JPEG image) as metadata. The reduced image generation unit 225 may supply the main image and the metadata to the image information addition unit 226.

The image information addition unit 226 performs processing pertaining to the addition of image information. For example, the image information addition unit 226 may obtain the main image and the reduced image supplied from the reduced image generation unit 225. The image information addition unit 226 may generate image information, which is information pertaining to the obtained main image. The image information addition unit 226 may associate the generated image information as metadata with the main image. The image information addition unit 226 may also obtain the certification URL (the reserved URL) supplied from the certification URL generation unit 211. The image information addition unit 226 may associate the certification URL (the reserved URL) as metadata with the main image. The image information addition unit 226 may also obtain the image type certification supplied from the image type certification generation unit 212. The image information addition unit 226 may associate the image type certification as metadata with the main image. In other words, the image information addition unit 226 can also be called a "metadata generation unit". The image information addition unit 226 may also embed information specifying the imaging device 111, the generating party, or the like in the main image (the first image). The image information addition unit 226 can therefore also be called an "embedding unit". The image information addition unit 226 may supply the main image and the metadata thereof to the hash processing unit 228.

The 3D information processing unit 227 performs processing on the 3D information. For example, the 3D information processing unit 227 may obtain the 3D information supplied from the 3D information sensor 242. The 3D information processing unit 227 may perform predetermined processing on the obtained 3D information. For example, the 3D information processing unit 227 may supply the obtained 3D information to the hash processing unit 228. In addition, if the signature is not generated, the 3D information processing unit 227 may reduce the resolution of the obtained 3D information, and supply the low-resolution 3D information to the hash processing unit 228, on the basis of control by the signature control unit 229. If the signature is generated, the 3D information processing unit 227 may skip reducing the resolution of the 3D information, and supply the obtained 3D information to the hash processing unit 228, on the basis of control by the signature control unit 229. The 3D information processing unit 227 can also be called a "3D information resolution setting unit". The 3D information processing unit 227 may also determine whether the subject (rangefinding target) of the obtained 3D information is a plane, and supply the result of the determination to the signature control unit 229. The 3D information processing unit 227 can also be called a "plane determination unit".

The hash processing unit 228 performs processing pertaining to the generation of hashes. For example, the hash processing unit 228 may obtain the main image and the metadata supplied from the image information addition unit 226. The hash processing unit 228 may obtain the 3D information supplied from the 3D information processing unit 227. The hash processing unit 228 may generate a hash using the main image, the metadata, and the 3D information. In other words, the hash processing unit 228 can also be called a "hash generation unit". The hash processing unit 228 may supply the generated hash to the signature generation unit 230 along with the main image, the metadata, and the 3D information.

The hash processing unit 228 may be driven under the control of the signature control unit 229. In other words, the hash processing unit 228 may generate a hash as described above when the signature control unit 229 instructs a hash to be generated, and may skip generating the hash when the signature control unit 229 does not instruct a hash to be generated. If the generation of the hash is skipped, the hash processing unit 228 may supply the main image, the metadata, and the 3D information to the signature generation unit 230.

The signature control unit 229 performs processing pertaining to the control of signatures. For example, the signature control unit 229 may control whether to generate a signature on the basis of instructions from a user, an application, or the like, input through the control unit 201. The signature control unit 229 may control whether to generate a signature on the basis of a result of determining whether the subject (the rangefinding target) of the 3D information supplied from the 3D information processing unit 227 is a plane. For example, the signature control unit 229 may perform control to skip generating a signature when the subject (the rangefinding target) of the 3D information is determined to be a plane. The signature control unit 229 may perform control to generate a signature when the subject (the rangefinding target) of the 3D information is determined not to be a plane. In this control, the signature control unit 229 may control whether to generate the signature by controlling the hash processing unit 228 and the signature generation unit 230. For example, when performing control to skip the generation of a signature, the signature control unit 229 may cause the hash processing unit 228 to skip the generation of a hash, and may cause the signature generation unit 230 to skip the generation of a signature. When performing control to generate a signature, the signature control unit 229 may cause the hash processing unit 228 to generate a hash, and may cause the signature generation unit 230 to generate a signature. The signature control unit 229 may supply control information indicating whether to generate the signature to the 3D information processing unit 227.

The signature generation unit 230 performs processing pertaining to the generation of signatures. For example, the signature generation unit 230 may obtain the hash supplied from the hash processing unit 228 and the information used to generate the hash (e.g., the main image, the metadata, the 3D information, and the like). The signature generation unit 230 may encrypt the obtained hash using the private key and generate a signature (digital signature). The signature generation unit 230 may supply the generated signature to the image file generation unit 231 along with information corresponding to the signature (e.g., the main image, the metadata, the hash, the 3D information, and the like).

The signature generation unit 230 may be driven under the control of the signature control unit 229. For example, when the signature control unit 229 has instructed a signature to be generated, the signature generation unit 230 may generate a signature as described above. When the signature control unit 229 has not instructed a signature to be generated, the signature generation unit 230 may skip generating the signature. If the generation of the signature is skipped, the signature generation unit 230 may supply the information supplied from the hash processing unit 228 (e.g., the main image, the metadata, the 3D information, and the like) to the image file generation unit 231.

The image file generation unit 231 performs processing related to the generation of image files. For example, the image file generation unit 231 may obtain the information supplied from the signature generation unit 230 (e.g., the main image, the metadata, the hash, the 3D information, the signature, and the like). The image file generation unit 231 may generate the image file in a predetermined format and store the obtained information (e.g., the main image, the metadata, the hash, the 3D information, the signature, and the like) in that image file. In other words, the image file generation unit 231 may store the certification URL in the image file. The image file generation unit 231 can therefore also be called a "certification URL storage unit". The image file generation unit 231 may also store the image type certification in the image file. The image file generation unit 231 can therefore also be called an "image type certification storage unit". The image file generation unit 231 may supply that image file to the image file recording unit 232. The image file generation unit 231 may also supply that image file to the image file supply unit 233.

The image file recording unit 232 performs processing pertaining to the recording of image files. The image file recording unit 232 has a drive that drives, writes to, and reads from a removable recording medium such as a magnetic disk, an optical disk, a magneto-optical disk, or a semiconductor memory, for example. For example, the image file recording unit 232 may obtain the image file supplied from the image file generation unit 231. The image file recording unit 232 may record the obtained image file on the removable recording medium through the drive.

The image file supply unit 233 performs processing pertaining to the supply of image files. The image file supply unit 233 has a communication function for communicating with the server 112 and the like over the network 110. For example, the image file supply unit 233 may obtain the image file supplied from the image file generation unit 231. The image file supply unit 233 may supply the obtained image file to the server 112 using the stated communication function.

### <Server>

The server 112 may be constituted by, for example, a single information processing device, or may be constituted by a plurality of information processing devices. The server 112 may also be implemented as, for example, cloud computing for processing shared among a plurality of devices over a network (i.e., a cloud server).

Fig. 11 is a block diagram illustrating an example of the configuration of the server 112 serving as one aspect of an image processing device to which the present technique is applied.

Note that Fig. 11 illustrates the main processing units, data flows, and the like, and the items illustrated in Fig. 11 are not necessarily all the items. In other words, the server 112 may include processing units not illustrated as blocks in Fig. 11, and processing and data flows not indicated as arrows or the like in Fig. 11.

As illustrated in Fig. 11, the server 112 includes an image file obtainment unit 311, an authenticity determination unit 312, a verification unit 313, a certification web page generation unit 314, an image file management unit 315, an image file providing unit 316, and a certification web page providing unit 317.

The image file obtainment unit 311 performs processing pertaining to the obtainment of image files. The image file obtainment unit 311 has a communication function for communicating with clients such as the imaging device 111 and the editing device 113 over the network 110. For example, the image file obtainment unit 311 may obtain an image file supplied from the client using the stated communication function. The image file obtainment unit 311 may supply the obtained image file to the authenticity determination unit 312. The image file obtainment unit 311 may also supply the image file to the verification unit 313.

The authenticity determination unit 312 executes processing pertaining to determining the authenticity of an image. For example, the authenticity determination unit 312 may obtain an image file supplied from the image file obtainment unit 311. The authenticity determination unit 312 may determine the authenticity of the image using the signature and the public key stored in the image file. The authenticity determination unit 312 may supply the result of the authenticity determination to the certification web page generation unit 314 along with the image file.

The verification unit 313 executes processing pertaining to the verification of images and the like. For example, the verification unit 313 may obtain an image file supplied from the image file obtainment unit 311. The verification unit 313 may verify the main image, the metadata, and the like stored in the image file. The verification unit 313 may supply the result of the verification to the certification web page generation unit 314 along with the image file.

The certification web page generation unit 314 executes processing pertaining to the generation and updating of certification web pages. For example, the certification web page generation unit 314 may obtain the information supplied from the authenticity determination unit 312 and the verification unit 313 (e.g., the image file, the authenticity determination result, the verification result, and the like). The certification web page generation unit 314 may generate a certification web page corresponding to the image file using the obtained information. Note that if a certification web page already exists, the certification web page generation unit 314 may update that certification web page. In this generation and updating, the certification web page generation unit 314 may reflect the authenticity determination result, the verification result, and the like in the certification web page. In addition, if an inconsistency is detected in the verification processing, the certification web page generation unit 314 may also reflect the verification result or the like in the certification web page of another images associated with the image stored in the image file. The certification web page generation unit 314 may supply the image file to the image file management unit 315. The certification web page generation unit 314 may supply the certification web page to the certification web page providing unit 317.

The image file management unit 315 executes processing pertaining to the management of image files. For example, the image file management unit 315 may obtain an image file supplied from the certification web page generation unit 314. The image file management unit 315 may store and manage the image file. Additionally, the image file management unit 315 may obtain an actual URL supplied from the certification web page providing unit 317. The image file management unit 315 may store that actual URL in the image file storing the image corresponding to the actual URL. The image file management unit 315 may supply the image file being managed to the image file providing unit 316.

The image file providing unit 316 executes processing pertaining to providing image files. For example, the image file providing unit 316 has a communication function for communicating with clients such as the editing device 113 and the display device 114 over the network 110. The image file providing unit 316 may obtain a request from the client using that communication function. The image file providing unit 316 may obtain the requested image file from the image file management unit 315. The image file providing unit 316 may supply the image file to the client, who is the requestor, using the communication function.

The certification web page providing unit 317 executes processing pertaining to providing certification web pages. For example, the certification web page providing unit 317 may obtain and manage the certification web page supplied from the certification web page generation unit 314. The certification web page providing unit 317 has a communication function for communicating with clients such as the display device 114 over the network 110. The certification web page providing unit 317 may publicize the certification web page to the client using that communication function. For example, the certification web page providing unit 317 may set a reserved URL stored in the image file and publicize the certification web page at that reserved URL. The certification web page providing unit 317 may generate an actual URL, set the actual URL, and publicize the certification web page at the actual URL. In other words, the certification web page providing unit 317 can also be called a "certification web page publicizing unit". The certification web page providing unit 317 may supply the actual URL to the image file management unit 315. The certification web page providing unit 317 may supply the client with the certification web page requested by the client (the certification web page publicized at a URL accessed by the client).

### <Editing Device>

The editing device 113 is constituted by an information processing device having an image editing function, such as a smartphone, a tablet terminal, a laptop personal computer, a desktop personal computer, a specialized computer, or a server, for example. The editing device 113 may be constituted by a single device (electronic device), or may be constituted by a plurality of devices (electronic devices). The editing device 113 will be described as being constituted by a single device (electronic device) in the following.

Fig. 12 is a block diagram illustrating an example of the configuration of the editing device 113 serving as one aspect of an image processing device to which the present technique is applied.

Note that Fig. 12 illustrates the main processing units, data flows, and the like, and the items illustrated in Fig. 12 are not necessarily all the items. In other words, the editing device 113 may include processing units not illustrated as blocks in Fig. 12, and processing and data flows not indicated as arrows or the like in Fig. 12.

As illustrated in Fig. 12, the editing device 113 includes an image file obtainment unit 411, an image editing unit 412, an image file updating unit 413, and an image file supply unit 414.

The image file obtainment unit 411 executes processing pertaining to the obtainment of image files. For example, the image file obtainment unit 411 has a communication function for communicating with other devices, such as the imaging device 111, the server 112, the display device 114, and the like, over the network 110. For example, the image file obtainment unit 411 may obtain an image file in which an image to be edited is stored using the stated communication function. The image file obtainment unit 411 may supply the obtained image file to the image editing unit 412.

The image editing unit 412 executes processing pertaining to editing (processing) images. For example, the image editing unit 412 may obtain an image file supplied from the image file obtainment unit 411. The image editing unit 412 may process the image stored in the obtained image file. The image editing unit 412 may supply the processed image file to the image file updating unit 413.

The image file updating unit 413 executes processing pertaining to updating image files. For example, the image file updating unit 413 may obtain an image file supplied from the image editing unit 412. The image file updating unit 413 may update the information (metadata and the like) stored in the image file in accordance with the editing (processing) executed by the image editing unit 412. The image file updating unit 413 may generate a hash, a signature, and the like so as to save a history. The image file updating unit 413 may supply the updated image file to the image file supply unit 414.

The image file supply unit 414 executes processing pertaining to the supply of image files. For example, the image file obtainment unit 411 has a communication function for communicating with other devices, such as the server 112 and the like, over the network 110. For example, the image file supply unit 414 may supply the updated image file (the edited image file) to the server 112 using the stated communication function.

### <Display Device>

The display device 114 is constituted by an information processing device having an image display function, such as a smartphone, a tablet terminal, a laptop personal computer, a desktop personal computer, a specialized computer, or a server, for example. The display device 114 may be constituted by a single device (electronic device), or may be constituted by a plurality of devices (electronic devices). The display device 114 will be described as being constituted by a single device (electronic device) in the following.

Fig. 13 is a block diagram illustrating an example of the configuration of the display device 114 serving as one aspect of an image processing device to which the present technique is applied.

Note that Fig. 13 illustrates the main processing units, data flows, and the like, and the items illustrated in Fig. 13 are not necessarily all the items. In other words, the display device 114 may include processing units not indicated as blocks in Fig. 13, and processing and data flows not indicated as arrows or the like in Fig. 13.

As illustrated in Fig. 13, the display device 114 includes an image obtainment unit 511, a display processing unit 512, a display unit 513, and a certification web page obtainment unit 514.

The image obtainment unit 511 performs processing related to obtaining images. The image obtainment unit 511 has a communication function for communicating with other devices, such as the server 112 and the like, over the network 110. For example, the image obtainment unit 511 may obtain an image file from another device using that communication function. The image obtainment unit 511 may obtain a page or the like of an SNS that displays the image using that communication function. The image obtainment unit 511 may supply the obtained information (such as the image file or the page of the SNS) to the display processing unit 512.

The display processing unit 512 executes processing pertaining to display. For example, the display processing unit 512 may obtain the information supplied from the image obtainment unit 511 (such as the image file or the page of the SNS). The display processing unit 512 may generate image information for displaying the obtained image (the main image stored in the image file, the SNS page, or the like), and supply the image information to the display unit 513 for display.

The display processing unit 512 may cause the certification web page obtainment unit 514 to request the certification web page corresponding to the displayed image, on the basis of a user operation, an instruction from an application, or the like. The display processing unit 512 may obtain the certification web page supplied from the certification web page obtainment unit 514. The display processing unit 512 may generate image information for displaying the obtained certification web page and supply the image information to the display unit 513 for display.

The display unit 513 performs processing pertaining to the display of the image information. The display unit 513 includes an image display device such as a liquid crystal monitor or the like, for example. Any device capable of displaying images may be used as the image display device. For example, the display unit 513 may obtain the image information supplied from the display processing unit 512. The display unit 513 may display the image corresponding to the obtained image information using the image display device. For example, the display unit 513 may display the image supplied from the display processing unit 512 (the main image stored in the image file, the page of the SNS, or the like). The display unit 513 may also display the certification web page supplied from the display processing unit 512.

The certification web page obtainment unit 514 executes processing related to obtaining certification web pages. A communication function for communicating with other devices, such as the server 112 and the like, over the network 110 is provided. For example, the certification web page obtainment unit 514 may obtain a certification web page published by the server 112 using the communication function. For example, the certification web page obtainment unit 514 may access a certification URL stored in the image file or a page of an SNS and obtain the certification web page publicized at that certification URL. The certification web page obtainment unit 514 may supply the obtained certification web page to the display processing unit 512.

### <Application of Present Technique>

The various methods (the present technique) described above in <3. Publicizing Certification Web Page> may be applied in (each device of) the image processing system 100 configured in this manner. For example, Method 1 described above may be applied. In other words, the certification URL may be stored in the image file that stores the first image.

For example, in the imaging device 111, the certification URL generation unit 211 may generate a certification URL, which is address information for publicizing a certification web page that certifies genuineness of an image. The image file generation unit 231 may store the certification URL in a file that stores a first image, the first image being the image that has been generated from analog information and is unprocessed.

Additionally, the image sensor 241 may capture an image of a subject and generate a captured image as the first image. The image file generation unit 231 may then store a certification URL in the file that stores the captured image.

Additionally, the image sensor 241 may generate the first image. The image information addition unit 226 may generate metadata of the first image. The hash processing unit 228 may generate a hash using the first image, the metadata thereof, and the certification URL. The signature generation unit 230 may generate a signature of the first image, the metadata, and the certification URL using the hash. The image file generation unit 231 may then generate a file storing the first image, the metadata, the certification URL, the hash, and the signature (an image file).

The image type certification generation unit 212 may also generate an image type certification certifying the type of the first image. The image file generation unit 231 may also store the image type certification in the file.

Additionally, the image sensor 241 may generate the first image. The image information addition unit 226 may embed information specifying the device or the generating party in the first image. The signature generation unit 230 may generate a signature of the first image in which the information is embedded.

The hash processing unit 228 may generate a plurality of partial hashes including one partial hash corresponding to the certification URL and the image type certification; and may generate a single hash corresponding to the first image, the metadata, and the certification URL using the plurality of partial hashes, the single hash being the hash.

In addition, the certification URL generation unit 211 may generate a reserved URL, which is the certification URL for the certification web page that has not yet been generated. The image file generation unit 231 may also store the reserved URL as the certification URL in the file.

The image file generation unit 231 may also store the certification URL in an area of the file where the certification URL is propagated even after the image is edited.

The "area that is propagated even after the image is edited" may, for example, be a vendor extension area (Vendor Extension), within the metadata area that stores the metadata, that can be extended by a vendor.

In addition, a certification web page corresponding to the image file may be generated, and the certification web page may be publicized at the certification URL. For example, in the server 112, the image file obtainment unit 311 may obtain a file storing an image. The certification web page generation unit 314 may generate a certification web page that certifies genuineness of the image. The certification web page providing unit 317 may publicize that certification web page at a certification URL.

Additionally, a reserved URL generated for the certification web page that has not yet been generated may be stored in the file as the certification URL. The certification web page providing unit 317 may then set the reserved URL and publicize the certification web page at the reserved URL. The image file management unit 315 may also generate a short URL indicating the reserved URL, and store the short URL as the certification URL in the file instead of the reserved URL.

The certification web page providing unit 317 may also generate a certification URL for the certification web page, set the generated certification URL, and publicize the certification web page at the set certification URL. The image file management unit 315 may then store the certification URL in the file. Additionally, the image file management unit 315 may generate a short URL indicating an alternative address to the address at which the certification web page is publicized, and store the short URL as the certification URL in the file.

Additionally, the certification web page generation unit 314 may generate the certification web page including an image, metadata of the image, and information about genuineness of the image.

The authenticity determination unit 312 may determine the authenticity of the image using the signature of the image. The certification web page generation unit 314 may then generate a certification web page including a result of the determination.

The verification unit 313 may also verify the genuineness of the image using the metadata. The certification web page generation unit 314 may generate a certification web page including a result of the verification.

Additionally, the certification web page generation unit 314 may also reflect the result of the verification in the certification web page of another image corresponding to the image, when an inconsistency is detected in the verification.

Additionally, the certification web page generation unit 314 may notify a requestor that requested the verification of the result of the verification.

Additionally, the certification web page generation unit 314 may notify a predetermined user of the result of the verification. At that time, for example, the notification of the detection result may be provided immediately after the detection, or at a predetermined timing (e.g., after waiting for a predetermined period of time).

Configuring the devices in this manner makes it possible to publicize information certifying the genuineness of the image on the certification web page. In other words, an indication that the genuineness of the image cannot be guaranteed (e.g., the detection of fraudulent behavior such as tampering with the image) can be communicated through the certification web page. Accordingly, the detection of fraudulent behavior such as tampering can be communicated to the entire system more quickly than when verification is only performed individually on an image-by-image basis (when reporting the detection of fraudulent behavior is left up to communication by a user or the like). This can be expected to ensure that fraudulent behavior is responded to earlier. A drop in the reliability of guaranteeing the genuineness of the image can therefore be suppressed.

### <Flow of Imaging Processing>

An example of the flow of the imaging processing executed by the imaging device 111 will be described with reference to the flowchart in Fig. 14.

When the imaging processing starts, in step S101, the control unit 201 turns on the power of the imaging processing unit 202 and starts a preview.

In step S102, the control unit 201 turns on a digital signature mode as an operating mode of the imaging processing unit 202. In other words, the control unit 201 sets the operating mode of the imaging processing unit 202 to a mode for storing digital signatures in image files.

In step S103, the sensor unit 222 (the image sensor 241 and the 3D information sensor 242) captures an image of a subject, and obtains a RAW image and 3D information on the same optical axis.

In step S104, the RAW processing unit 223 performs correction processing such as white balance adjustment on the RAW image. The YUV processing unit 224 converts the corrected RAW image into a YUV image. The YUV processing unit 224 also encodes that YUV image and generates a JPEG image. The reduced image generation unit 225 generates a reduced image in which the JPEG image (the main image) is reduced. Any method may be used to generate the reduced image. The reduced image may also be of any desired size. For example, the reduced image may be what is known as a thumbnail, or what is known as a screennail. The image information addition unit 226 generates image information pertaining to the main image or the reduced image as metadata. The 3D information processing unit 227 performs predetermined processing on the 3D information, such as reducing the resolution of the 3D information, for example.

In step S105, the certification URL generation unit 211 generates the reserved URL as the certification URL. The image information addition unit 226 associates the reserved URL as metadata with the main image.

In step S106, the image type certification generation unit 212 generates an image type certification for the main image (the captured image). The image information addition unit 226 associates the image type certification as metadata with the main image.

In step S107, the hash processing unit 228 generates a hash using the main image (the captured image), the metadata, and the like.

In step S108, the signature generation unit 230 generates the signature of the main image (the captured image) and the metadata by encrypting the generated hash using a private key.

In step S109, the image file generation unit 231 generates an image file that stores the main image (the captured image) and the metadata (including the certification URL and the image type certification).

In step S110, the image file recording unit 232 records the image file.

In step S111, the image file supply unit 233 supplies the image file to the server 112.

When step S111 ends, the imaging processing ends.

### <Flow of Image Management Processing>

An example of the flow of the image management processing executed by the server 112 will be described with reference to the flowchart illustrated in Fig. 15.

When the image management processing is started, in step S201, the image file obtainment unit 311 obtains an image file. The main image (the first image or the newest image), metadata of the main image, a hash, a signature, and the like are stored in the image file.

In step S202, the authenticity determination unit 312 determines the authenticity of the main image using the signature stored in the image file, and in step S203, determines whether tampering with the main image has been detected. If it is determined that tampering has been detected, error processing such as making a notification that tampering has been detected is executed, and the image management processing ends. If it is determined in step S203 that no tampering has been detected, the sequence moves to step S204.

In step S204, the certification web page generation unit 314 generates a certification web page for the main image.

In step S205, the certification web page providing unit 317 determines whether the certification URL is stored in the image file. If it is determined that a reserved URL is stored in the image file, the sequence moves to step S206.

In step S206, the certification web page providing unit 317 sets the reserved URL stored in the image file and publicizes the certification web page at that reserved URL (publicizes the certification web page in association with the reserved URL). When the processing of step S206 ends, the sequence moves to step S209.

However, if it is determined in step S205 that the certification URL is not stored in the image file, the sequence moves to step S207.

In step S207, the certification web page providing unit 317 generates an actual URL, sets the actual URL, and publicizes the certification web page at the actual URL (generates the actual URL, and publicizes the certification web page in association therewith).

In step S208, the image file management unit 315 stores the actual URL as the certification URL in the image file. When the processing of step S208 ends, the sequence moves to step S209.

In step S209, the verification unit 313 executes the verification processing.

In step S210, the image file management unit 315 manages the image file.

Once the processing of step S210 ends, the image management processing ends.

### <Flow of Verification Processing>

An example of the flow of the verification processing executed in step S209 of Fig. 15 will be described with reference to the flowchart in Fig. 16.

When the verification processing is started, in step S231, the verification unit 313 verifies the image and the like stored in the image file, and in step S232, determines whether an inconsistency has been detected. If an inconsistency is determined to have been detected, the sequence moves to step S233.

In step S233, the certification web page generation unit 314 performs processing for retracting a guarantee of correctness. For example, the certification web page generation unit 314 may reflect the verification result in the certification web page. Additionally, the certification web page generation unit 314 may make a notification of the verification result.

Once the processing of step S233 ends, the verification processing ends, and the sequence returns to Fig. 15. If it is determined in step S232 that no inconsistency has been detected, the verification processing ends, and the sequence returns to Fig. 15.

### <Flow of Editing Processing>

An example of the flow of the editing processing executed by the editing device 113 will be described next with reference to the flowchart in Fig. 17.

When the editing processing is started, in step S301, the image file obtainment unit 411 of the editing device 113 obtains an image file.

In step S302, the image editing unit 412 processes the main image stored in the image file.

In step S303, the image file updating unit 413 updates the metadata so as to leave a history. In step S304, the image file updating unit 413 generates the signature so as to leave a history.

In step S304, the image file supply unit 414 supplies the edited image file.

When the processing of step S304 ends, the editing processing ends.

### <Flow of Display Processing>

An example of the flow of the display processing executed by the display device 114 will be described next with reference to the flowchart in Fig. 18.

When the display processing starts, in step S401, the display processing unit 512 of the display device 114 displays an image. For example, the display processing unit 512 causes the display unit 513 to display the image stored in the obtained image file. The display processing unit 512 also causes the display unit 513 to display the page of an SNS including the image.

In step S402, the certification web page obtainment unit 514 requests the certification web page from the server 112. The certification web page obtainment unit 514 makes this request by accessing the certification URL, for example.

In step S403, the certification web page obtainment unit 514 obtains the certification web page supplied in response to the request.

In step S404, the display processing unit 512 causes the display unit 513 to display the certification web page.

Once the processing of step S404 ends, the display processing ends.

Executing each instance of processing in this manner makes it possible to publicize information certifying the genuineness of the image on the certification web page. In other words, an indication that the genuineness of the image cannot be guaranteed (e.g., the detection of fraudulent behavior such as tampering with the image) can be communicated through the certification web page. Accordingly, the detection of fraudulent behavior such as tampering can be communicated to the entire system more quickly than when verification is only performed individually on an image-by-image basis (when reporting the detection of fraudulent behavior is left up to communication by a user or the like). This can be expected to ensure that fraudulent behavior is responded to earlier. A drop in the reliability of guaranteeing the genuineness of the image can therefore be suppressed.

### <5. Supplementary Notes>

### <Other>

The examples (methods) of the present technique described above may be applied in combination with other examples (methods) as appropriate as long as no conflicts arise as a result thereof. The examples of the present technique described above may also be applied in combination with other techniques aside from those described above.

### <Computer>

The series of processing described above can be executed by hardware, or can be executed by software. When the series of steps of processing is executed by software, a program of the software is installed in a computer. Here, the computer includes, for example, a computer built in dedicated hardware and a general-purpose personal computer in which various programs are installed to be able to execute various functions.

Fig. 19 is a block diagram illustrating an example of hardware configuration of a computer that executes the series of processing described above according to a program.

In a computer 900 illustrated in Fig. 19, a Central Processing Unit (CPU) 901, Read Only Memory (ROM) 902, and Random Access Memory (RAM) 903 are connected to each other by a bus 904.

An input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, and a non-volatile memory. The communication unit 914 includes, for example, a network interface. The drive 915 drives a removable medium 921 such as a magnetic disk, an optical disc, a magneto-optical disk, semiconductor memory, or the like.

In the computer that has the above configuration, for example, the CPU 901 performs the above-described series of processes by loading a program stored in the storage unit 913 to the RAM 903 via the input/output interface 910 and the bus 904 and executing the program. Data and the like necessary for the CPU 901 to execute the various kinds of processing is also stored as appropriate in the RAM 903.

The program executed by the computer can be recorded in, for example, the removable medium 921 as a package medium or the like and provided in such a form. In this case, the program may be installed in the storage unit 913 via the input/output interface 910 by inserting the removable medium 921 into the drive 915.

Additionally, the program may also be provided via a wired or wireless transmission medium such as a local area network, the Internet, or digital satellite broadcasting. In this case, the program can be received by the communication unit 914 and installed in the storage unit 913.

In addition, this program can be installed in advance in the ROM 902, the storage unit 913, or the like.

### <Applications of Present Technique>

The present technique can be applied in any coding/decoding methods.

The present technique can be applied in any desired configuration. For example, the present technique can be applied in a variety of electronic devices.

Additionally, for example, the present technique can be implemented as a configuration of a part of a device such as a processor (e.g., a video processor) of a system Large Scale Integration (LSI) circuit, a module (e.g., a video module) using a plurality of processors or the like, a unit (e.g., a video unit) using a plurality of modules or the like, or a set (e.g., a video set) with other functions added to the unit.

For example, the present technique can also be applied in a network system constituted by a plurality of devices. The present technique may be implemented as, for example, cloud computing for processing shared among a plurality of devices over a network. For example, the present technique may be implemented in a cloud service that provides services pertaining to images (moving images) to any terminals such as a computer, an Audio Visual (AV) device, a mobile information processing terminal, and an Internet-of-Things (IoT) device or the like.

Note that herein, "system" means a set of a plurality of constituent elements (devices, modules (components), or the like), and it does not matter whether all the constituent elements are provided in the same housing. Therefore, a plurality of devices contained in separate housings and connected over a network, and one device in which a plurality of modules are contained in one housing, are both "systems".

### <Fields and Applications in which Present Technique is Applicable>

A system, a device, a processing unit, or the like in which the present technique is applied can be used in any field, such as, for example, transportation, medical care, crime prevention, agriculture, livestock industry, mining, beauty, factories, home appliances, weather, nature monitoring, and the like. The application of the present technique can also be implemented as desired.

For example, the present technique can be applied in systems and devices used for providing content for viewing and the like. In addition, for example, the present technique can be applied in systems and devices used for transportation, such as traffic condition monitoring and autonomous driving control. Furthermore, for example, the present technique can be applied in systems and devices used for security. In addition, for example, the present technique can be applied to systems and devices used for automatically controlling machines and the like. Furthermore, for example, the present technique can be applied in systems and devices used for the agriculture and livestock industries. In addition, the present technique can also be applied, for example, in systems and devices for monitoring natural conditions such as volcanoes, forests, oceans, wildlife, and the like. Furthermore, for example, the present technique can be applied in systems and devices used for sports.

### <Other>

Note that the term "flag" as used herein refers to information used to identify a plurality of states, and includes not only information used when identifying two states, i.e., true (1) or false (0), but also information capable of identifying three or more states. Accordingly, the value this "flag" can take may be, for example, a binary value of 1 or 0, or three or more values. In other words, the number of bits constituting this "flag" can be set as desired, as one bit or multiple bits. Additionally, the identification information (including flags) is assumed to include not only the identification information in the bitstream, but also the difference information of the identification information relative to given reference information in the bitstream, and thus "flag" and "identification information" herein include not only that information, but also the difference information relative to that reference information.

Additionally various types of information (metadata and the like) pertaining to a captured image may be transmitted or recorded in any form as long as the information is associated with the captured image. Here, the term "associate" means, for example, to make one piece of data usable (linkable) for another piece of data when processing the other piece of data. In other words, data associated with each other may be grouped together as a single piece of data, or may be separate pieces of data. For example, information associated with encoded data (an image) may be transmitted over a different transmission path than the encoded data (the image). Additionally, for example, information associated with encoded data (an image) may be recorded in a different recording medium (or in a different recording area of the same recording medium) than the encoded data (the image). Note that this "association" may be for part of the data instead of the entirety of the data. For example, an image and information corresponding to the image may be associated with a plurality of frames, one frame, or any unit such as a part within the frame.

As used herein, a term such as "combining", "multiplexing", "adding", "integrating", "including", "storing", "pushing", "entering", or "inserting" means that a plurality of items are collected as one, for example, encoded data and metadata are collected as one piece of data, and means one method of the above-described "associating".

Additionally, the embodiments of the present technique are not limited to the above-described embodiments, and various modifications can be made without departing from the essential spirit of the present technique.

For example, configurations described as one device (or one processing unit) may be divided to be configured as a plurality of devices (or processing units). Conversely, configurations described as a plurality of devices (or processing units) in the foregoing may be collectively configured as one device (or one processing unit). Configurations other than those described above may of course be added to the configuration of each device (or each processing unit). Furthermore, part of the configuration of one device (or one processing unit) may be included in the configuration of another device (or another processing unit) as long as the configuration or operation of the entire system is substantially the same.

Additionally, for example, the program described above may be executed on any device. In this case, the device may have necessary functions (function blocks and the like) and may be capable of obtaining necessary information.

Additionally, for example, each step of a single flowchart may be executed by a single device, or may be executed cooperatively by a plurality of devices. Furthermore, if a single step includes a plurality of processes, the plurality of processes may be executed by a single device or shared by a plurality of devices. In other words, the plurality of kinds of processing included in the single step may be executed as processing for a plurality of steps. Conversely, processing described as a plurality of steps may be collectively executed as a single step.

Additionally, for example, the program executed by the computer may be such that the processing steps describing the program are executed in chronological order according to the order described herein, or are executed in parallel or individually at a necessary timing, such as in response to a call. That is, as long as no contradiction arises, the processing steps may be executed in an order different from the order described above. Furthermore, the processing steps describing the program may be executed in parallel with the processing of another program or may be executed in combination with the processing of the other program.

Additionally, for example, the multiple techniques related to the present technique can be implemented independently on their own, as long as no contradictions arise. Of course, any number of modes of the present technique may be used in combination. For example, part or all of the present technique described in any of the embodiments may be implemented in combination with part or all of the present technique described in the other embodiments. Furthermore, part or all of any of the above-described modes of the present technique may be implemented in combination with other techniques not described above.

The present technique can also be configured as follows.
(1) An image processing device including:
   a certification URL generation unit that generates a certification URL, the certification URL being address information for publicizing a certification web page that certifies genuineness of an image; and
   a certification URL storage unit that stores the certification URL in a file that stores a first image, the first image being the image that has been generated from analog information and is unprocessed.
(2) The image processing device according to (1), further including:
   an imaging unit that captures an image of a subject and generates a captured image as the first image,
   wherein the certification URL storage unit is configured to store the certification URL in the file that stores the captured image.
(3) The image processing device according to (1) or (2),
   wherein the certification URL generation unit is configured to generate a reserved URL, the reserved URL being the certification URL for the certification web page that has not yet been generated, and
   the certification URL storage unit is configured to store the reserved URL in the file as the certification URL.
(4) The image processing device according to any of (1) to (3),
   wherein the certification URL storage unit is configured to store the certification URL in an area of the file that is propagated even after the image is edited.
(5) The image processing device according to (4),
   wherein the area is a vendor extension area within a metadata area that stores metadata.
(6) The image processing device according to any of (1) to (5), further including:
   a first image generation unit that generates the first image;
   a metadata generation unit that generates metadata of the first image;
   a hash generation unit that generates a hash using the first image, the metadata, and the certification URL; and
   a signature generation unit that generates a signature of the first image, the metadata, and the certification URL using the hash,
   wherein the certification URL storage unit is configured to generate the file storing the first image, the metadata, the certification URL, the hash, and the signature.
(7) The image processing device according to (6), further including:
   an image type certification generation unit that generates an image type certification certifying a type of the first image,
   wherein the certification URL storage unit is configured to store the image type certification in the file. (8) The image processing device according to (7),
   wherein the hash generation unit:
      generates a plurality of partial hashes including one partial hash corresponding to the certification URL and the image type certification; and
      generates a single hash corresponding to the first image, the metadata, and the certification URL using the plurality of partial hashes, the single hash being the hash.
(9) The image processing device according to any of (1) to (8), further including:
   a first image generation unit that generates the first image;
   an embedding unit that embeds information specifying a device or a generating party in the first image; and
   a signature generation unit that generates a signature of the first image in which the information is embedded.
(10) An image processing method including:
   generating a certification URL, the certification URL being address information for publicizing a certification web page that certifies genuineness of an image; and
   storing the certification URL generated in a file that stores a first image, the first image being the image that has been generated from analog information and is unprocessed.
(11) An image processing device including:
   a file obtainment unit that obtains a file storing an image;
   a certification web page generation unit that generates a certification web page, the certification web page certifying genuineness of the image; and
   a certification web page publicizing unit that publicizes the certification web page at a certification URL.
(12) The image processing device according to (11),
   wherein the certification web page generation unit is configured to generate the certification web page including the image, metadata of the image, and information about the genuineness of the image.
(13) The image processing device according to (11) or (12),
   wherein a reserved URL generated for the certification web page that has not yet been generated is stored in the file as the certification URL, and
   the certification web page publicizing unit is configured to set the reserved URL and publicize the certification web page at the reserved URL.
(14) The image processing device according to (13), further including:
   a certification URL storage unit that generates a short URL indicating the reserved URL, and stores the short URL as the certification URL in the file instead of the reserved URL.
(15) The image processing device according to any of (11) to (14),
   wherein the certification web page publicizing unit is configured to generate the certification URL for the certification web page, set the certification URL generated, and publicize the certification web page at the certification URL set, and
   the image processing device further including:
      a certification URL storage unit that stores the certification URL in the file.
(16) The image processing device according to (15),
   wherein the certification URL storage unit generates a short URL indicating an alternative address to an address at which the certification web page is publicized, and stores the short URL as the certification URL in the file.
(17) The image processing device according to any of (11) to (16), further including:
   an authenticity determination unit that makes a determination as to authenticity of the image using a signature of the image,
   wherein the certification web page generation unit is configured to generate the certification web page including a result of the determination.
(18) The image processing device according to any of (11) to (17), further including:
   a verification unit that makes a verification of the genuineness of the image using metadata,
   wherein the certification web page generation unit is configured to generate the certification web page including a result of the verification.
(19) The image processing device according to (18),
   wherein the certification web page generation unit is further configured to also reflect the result of the verification in the certification web page of an other image corresponding to the image, when an inconsistency is detected in the verification.
(20) The image processing device according to (18) or (19),
   wherein the certification web page generation unit is configured to notify a requestor that requested the verification of the result of the verification.
(21) The image processing device according to any of (18) to (20),
   wherein the certification web page generation unit is configured to notify a predetermined user of the result of the verification.
(22) An image processing method including:
   obtaining a file storing an image;
   generating a certification web page, the certification web page certifying genuineness of the image; and
   publicizing the certification web page at a certification URL.

### [Reference Signs List]

100 Image processing system
110 Network
111 Imaging device
112 Server
113 Editing device
114 Display device
201 Control unit
202 Imaging processing unit
211 Certification URL generation unit
212 Image type certification generation unit
221 Optical system
222 Sensor unit
223 RAW processing unit
224 YUV processing unit
225 Reduced image generation unit
226 Image information addition unit
227 3D information processing unit
228 Hash processing unit
229 Signature control unit
230 Signature generation unit
231 Image file generation unit
232 Image file recording unit
233 Image file supply unit
241 Image sensor
242 3D information sensor
311 Image file obtainment unit
312 Authenticity determination unit
313 Verification unit
314 Certification web page generation unit
315 Image file management unit
316 Image file providing unit
317 Certification web page providing unit
411 Image file obtainment unit
412 Image editing unit
413 Image file updating unit
414 Image file supply unit
511 Image obtainment unit
512 Display processing unit
513 Display unit
514 Certification web page obtainment unit
900 Computer

## Claims

1. An image processing device comprising:
a certification URL generation unit that generates a certification URL, the certification URL being address information for publicizing a certification web page that certifies genuineness of an image; and
a certification URL storage unit that stores the certification URL in a file that stores a first image, the first image being the image that has been generated from analog information and is unprocessed.

2. The image processing device according to claim 1, further comprising:
an imaging unit that captures an image of a subject and generates a captured image as the first image,
wherein the certification URL storage unit is configured to store the certification URL in the file that stores the captured image.

3. The image processing device according to claim 1,
wherein the certification URL generation unit is configured to generate a reserved URL, the reserved URL being the certification URL for the certification web page that has not yet been generated, and
the certification URL storage unit is configured to store the reserved URL in the file as the certification URL.

4. The image processing device according to claim 1,
wherein the certification URL storage unit is configured to store the certification URL in an area of the file that is propagated even after the image is edited.

5. The image processing device according to claim 4,
wherein the area is a vendor extension area within a metadata area that stores metadata.

6. The image processing device according to claim 1, further comprising:
a first image generation unit that generates the first image;
a metadata generation unit that generates metadata of the first image;
a hash generation unit that generates a hash using the first image, the metadata, and the certification URL; and
a signature generation unit that generates a signature of the first image, the metadata, and the certification URL using the hash,
wherein the certification URL storage unit is configured to generate the file storing the first image, the metadata, the certification URL, the hash, and the signature.

7. The image processing device according to claim 6, further comprising:
an image type certification generation unit that generates an image type certification certifying a type of the first image,
wherein the certification URL storage unit is configured to store the image type certification in the file.

8. The image processing device according to claim 7,
wherein the hash generation unit:
generates a plurality of partial hashes including one partial hash corresponding to the certification URL and the image type certification; and
generates a single hash corresponding to the first image, the metadata, and the certification URL using the plurality of partial hashes, the single hash being the hash.

9. The image processing device according to claim 1, further comprising:
a first image generation unit that generates the first image;
an embedding unit that embeds information specifying a device or a generating party in the first image; and
a signature generation unit that generates a signature of the first image in which the information is embedded.

10. An image processing method comprising:
generating a certification URL, the certification URL being address information for publicizing a certification web page that certifies genuineness of an image; and
storing the certification URL generated in a file that stores a first image, the first image being the image that has been generated from analog information and is unprocessed.

11. An image processing device comprising:
a file obtainment unit that obtains a file storing an image;
a certification web page generation unit that generates a certification web page, the certification web page certifying genuineness of the image; and
a certification web page publicizing unit that publicizes the certification web page at a certification URL.

12. The image processing device according to claim 11,
wherein the certification web page generation unit is configured to generate the certification web page including the image, metadata of the image, and
information about the genuineness of the image.

13. The image processing device according to claim 11,
wherein a reserved URL generated for the certification web page that has not yet been generated is stored in the file as the certification URL, and
the certification web page publicizing unit is configured to set the reserved URL and publicize the certification web page at the reserved URL.

14. The image processing device according to claim 13, further comprising:
a certification URL storage unit that generates a short URL indicating the reserved URL, and stores the short URL as the certification URL in the file instead of the reserved URL.

15. The image processing device according to claim 11,
wherein the certification web page publicizing unit is configured to generate the certification URL for the certification web page, set the certification URL generated, and publicize the certification web page at the certification URL set, and
the image processing device further comprising:
a certification URL storage unit that stores the certification URL in the file.

16. The image processing device according to claim 15,
wherein the certification URL storage unit generates a short URL indicating an alternative address to an address at which the certification web page is publicized, and stores the short URL as the certification URL in the file.

17. The image processing device according to claim 11, further comprising:
an authenticity determination unit that makes a determination as to authenticity of the image using a signature of the image,
wherein the certification web page generation unit is configured to generate the certification web page including a result of the determination.

18. The image processing device according to claim 11, further comprising:
a verification unit that makes a verification of the genuineness of the image using metadata,
wherein the certification web page generation unit is configured to generate the certification web page including a result of the verification.

19. The image processing device according to claim 18,
wherein the certification web page generation unit is further configured to also reflect the result of the verification in the certification web page of an other image corresponding to the image, when an inconsistency is detected in the verification.

20. The image processing device according to claim 18,
wherein the certification web page generation unit is configured to notify a requestor that requested the verification of the result of the verification.

21. The image processing device according to claim 18,
wherein the certification web page generation unit is configured to notify a predetermined user of the result of the verification.

22. An image processing method comprising:
obtaining a file storing an image;
generating a certification web page, the certification web page certifying genuineness of the image; and
publicizing the certification web page at a certification URL.
